(19) Europäisches Patentamt / European Patent Office / Office européen des brevets

(11) **EP 4 024 300 A1**

(12) **EUROPEAN PATENT APPLICATION**

(43) Date of publication:
**06.07.2022 Bulletin 2022/27**

(21) Application number: **21198838.1**

(22) Date of filing: **24.09.2021**

(51) International Patent Classification (IPC):
**G06Q 10/04** $^{(2012.01)}$  **G06Q 10/06** $^{(2012.01)}$

(52) Cooperative Patent Classification (CPC):
**G06Q 10/04; G06Q 10/0631; G06Q 10/06311**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2021 JP 2021000244**

(71) Applicant: **FUJITSU LIMITED**
**Kanagawa 211-8588 (JP)**

(72) Inventor: **Takita, Yutaka**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, SCHEDULE SPECIFICATION METHOD, AND SCHEDULE SPECIFICATION PROGRAM**

(57) An information processing device includes, a classification unit that classifies the plurality of tasks into a plurality of task groups so that tasks that corresponds to a same device among the plurality of tasks do not belong to a same task group; a solution unit that sets a time slot in which each of the plurality of task groups occupies each of the plurality of devices, sets a table that defines a relationship between a type of each of the devices and a value of the time slot, and arranges each task group in the table based on an objective function whose cost increases when task groups of a same product are arranged continuously; and a specification unit that determines an order of all tasks included in the implementation information based on the table, and specifies each of a start time of a task included in the implementation information.

FIG. 5

**Description**

FIELD

The embodiment relates to an information processing device, a schedule specification method, and a schedule specification program.

BACKGROUND

When producing n pieces of the same product, there is a problem of determining at which time each task that needs to be processed by hardware is allocated. Such a problem is called a production scheduling problem.

For example, information is given on an order of tasks to be performed when products are produced, a type of hardware used by each task, a time until completion of each task, and the number of products to be produced, and scheduling is performed on the basis of such information.

When scheduling is performed, a plurality of constraints are set, and scheduling is performed such that all production end times are as early as possible while satisfying these constraints. For example, there are constraints (1) to (5) as follows.

Constraint (1): In product producing, each task needs to be performed in an order. In a case where there are 21 tasks, these are executed in an order of 1, 2, 3, ... 20, 21.
Constraint (2): Each task has a minimum processing time.
Constraint (3): The process cannot proceed to the next task until the previous task is ended. In other words, for example, only one task may be handled by a time slot that is one product.
Constraint (4): Hardware that may process each step is limited. For example, for each task, needed hardware is uniquely determined.
Constraint (5): Only up to one product can occupy each piece of hardware.

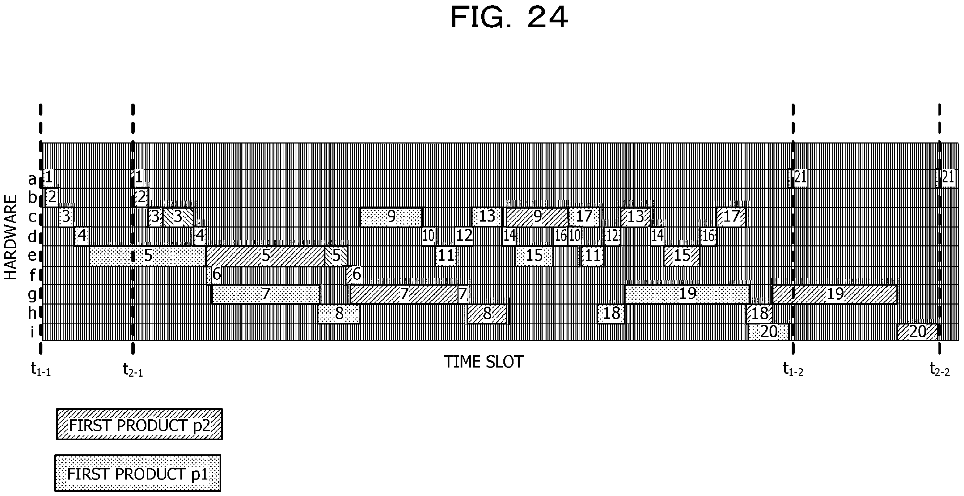

FIG. 24 is Figure (1) illustrating a result of scheduling when certain two same products are produced. In the figure illustrated in FIG. 24, a horizontal axis corresponds to a time slot, and a vertical axis corresponds to hardware types a, b, c, d, e, f, g, h, and i.

In a schedule for production of the first product, the first task is started in a time slot $t_{1\text{-}1}$, and the 21st task (last task) is ended in a time slot $t_{1\text{-}2}$. In a schedule for production of the second product, the first task is started in a time slot $t_{2\text{-}1}$ and the 21st task is ended in a time slot $t_{2\text{-}2}$. In the example illustrated in FIG. 24, the time slot $t_{2\text{-}2}$ becomes the production end time, and it is desired to make the production end time as early as possible.

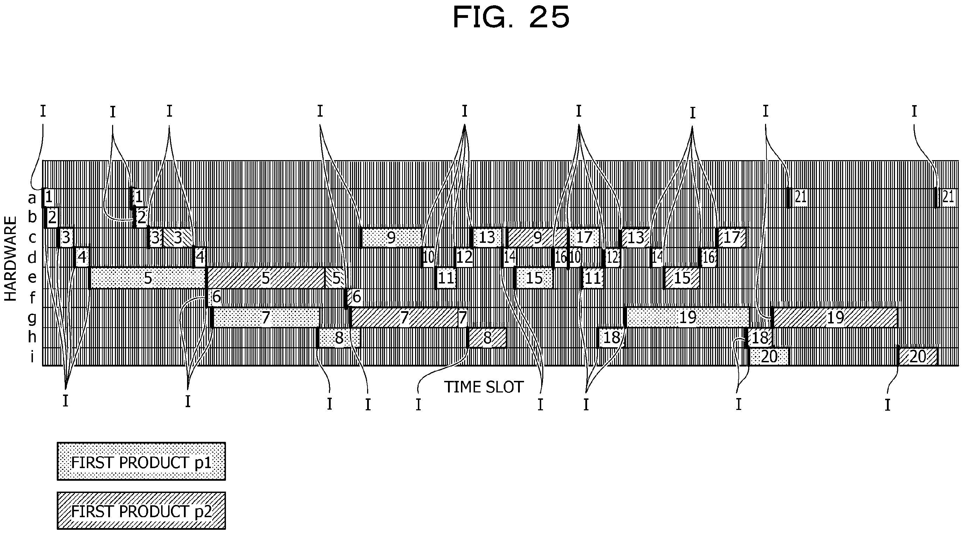

Here, in a general solution of the production scheduling problem, a decision variable for whether or not to start in each time slot is allocated for each product $p_k$ and each task w. FIG. 25 is Figure (2) illustrating a result of scheduling when certain two same products are produced. For simplicity, hardware that performs each task is considered to be uniquely determinable. In FIG. 25, assuming that the number of products is "2", the number of tasks is "21", and the number of time slots is "400", 168000 variables are used by integrating these. Each line segment I shows a variable of a time slot that is actually selected for each product $p_k$ and each task w.

Japanese Laid-open Patent Publication No. 2005-190241 is disclosed as related art.

SUMMARY

[TECHNICAL PROBLEM]

As described above, in the general solution of the production scheduling problem, a decision variable for whether or not to start in each time slot is allocated for each product $p_k$ and each task w, and the schedule is specified. However, in an actual field where a product is produced, there is a problem that the number of decision variables increases exponentially and a calculation cost increases, since a production scheduling problem with a larger number of products, number of tasks, and time slot ranges is to be solved.

In one aspect, it is an object of the embodiment to provide an information processing device, a schedule specification method, and a schedule specification program that may suppress a calculation cost when solving a production scheduling problem.

According to an aspect of the embodiments, an information processing device includes, a classification unit that classifies, based on implementation information that defines a correspondence between an order of a plurality of tasks for production of a plurality of products and a plurality of devices used for the plurality of tasks, for the respective implementation information, the plurality of tasks into a plurality of task groups so that tasks that corresponds to a same device among the plurality of tasks do not belong to a same task group; a solution unit that sets a time slot in which each of the plurality of task groups occupies each of the plurality of devices, sets a table that defines a relationship between a type of each of the devices and a value of the time slot, and arranges each task group in the table based on an objective function whose cost increases when task groups of a same product are arranged continuously, based on a condition that each of a plurality of task groups appear in only one place in the table, a condition that in the plurality of task groups that includes a same order of tasks, a value of a time slot in which a first task group appears in the table is smaller than a value of a time slot in which a second task group with an execution order which is later than an execution order of the first task group appears in the table, a condition that an order of the plurality of tasks is maintained in a same task group, and a condition that one task group appears for a value of one time slot; and a specification unit that determines an order of all tasks included in the implementation information based on the table, and specifies each of a start time of a task included in the implementation information, by allocating a relationship between each of the tasks and each of the devices used for the tasks based on the order of the all tasks.

[ADVANTAGEOUS EFFECTS OF INVENTION]

It is possible to suppress a calculation cost when solving a production scheduling problem.

BRIEF DESCRIPTION OF DRAWINGS

FIG. 1 is a diagram for explaining an example of hardware that produces a product;
FIG. 2 is a table illustrating an example of implementation information;
FIG. 3A, FIG. 3B and FIG. 3C are views for explaining Step 1 executed by an information processing device;
FIG. 4 is a table for explaining Step 2 executed by the information processing device;
FIG. 5 is a functional block diagram illustrating a configuration of the information processing device according to the present embodiment;
FIG. 6 is a table for explaining processing of a classification unit;
FIG. 7 is a view for explaining a relationship between a value of an objective function and an arrangement order of each task group;
FIG. 8 is a view for explaining a custom constraint of Equation (6);
FIG. 9 is a view for explaining a custom constraint of Equation (8);
FIG. 10 is a view for explaining a custom constraint of Equation (9);
FIG. 11 is a view for explaining a custom constraint of Equation (10);
FIG. 12 is a view for explaining a custom constraint of Equation (11);
FIG. 13 is a view for explaining a custom constraint of Equation (12);
FIG. 14A, FIG. 14B and FIG. 14C are views for explaining a process in which a specification unit determines a task order;
FIG. 15 is a view illustrating an example of a product-task consideration order list;
FIG. 16 is a flowchart illustrating a processing procedure in which the specification unit determines a task order;
FIG. 17 is Figure (1) for explaining a process in which the specification unit individually specifies a start time of each task;
FIG. 18 is Figure (2) for explaining the process in which the specification unit individually specifies a start time of each task;
FIG. 19 is Figure (3) for explaining the process in which the specification unit individually specifies a start time of each task;
FIG. 20 is Figure (4) for explaining the process in which the specification unit individually specifies a start time of each task;
FIG. 21 is a flowchart illustrating a processing procedure in which the specification unit individually specifies a start time of each task;
FIG. 22 is a flowchart illustrating a processing procedure of the information processing device according to the present embodiment;
FIG. 23 is a diagram illustrating an example of a hardware configuration of a computer that implements functions similar to those of the information processing device according to the present embodiment;
FIG. 24 is Figure (1) illustrating a result of scheduling when certain two same products are produced; and
FIG. 25 is Figure (2) illustrating a result of scheduling when certain two same products are produced.

DESCRIPTION OF EMBODIMENTS

Hereinafter, an embodiment of an information processing device, a schedule specification method, and a schedule specification program disclosed in the present application will be described in detail with reference to the accompanying drawings. Note that an embodiment is not limited to the present embodiment.

[Embodiment]

An information processing device according to the present embodiment executes processing by using implementation information that defines a relationship between an order of tasks for production of a certain product (hereinafter, a product) and hardware used by the tasks. Furthermore, it is assumed that, in the implementation information, how many pieces of the same product are to be produced is specified.

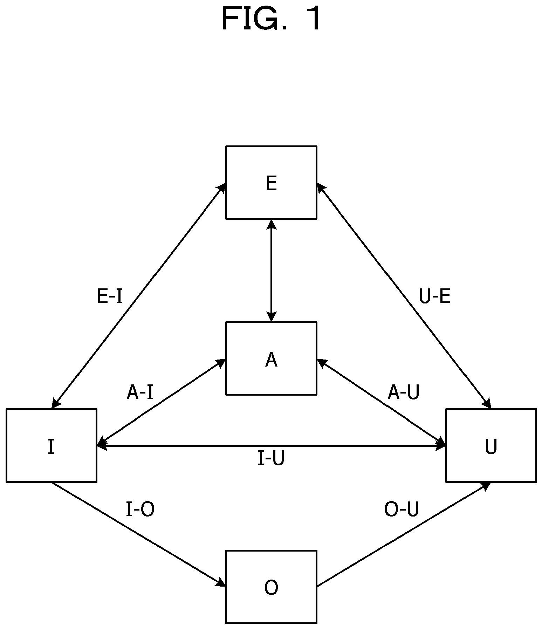

FIG. 1 is a diagram for explaining an example of hardware that produces a product. As illustrated in FIG. 1, the hardware (device) that produces a product includes pieces of hardware A, I, U, E, and O. In the present embodiment, a transmission line between individual pieces of hardware is also treated as one piece of hardware.

The hardware A and the hardware I are connected by a transmission line A-I. The hardware A and the hardware U are connected by a transmission line A-U. The hardware I and the hardware U are connected by a transmission line I-U. The hardware I and the hardware O are connected by a transmission line I-O. The hardware O and the hardware U are connected by a transmission line O-U. The hardware E and the hardware I are connected by a transmission line E-I. The hardware U and the hardware E are connected by a transmission line U-E.

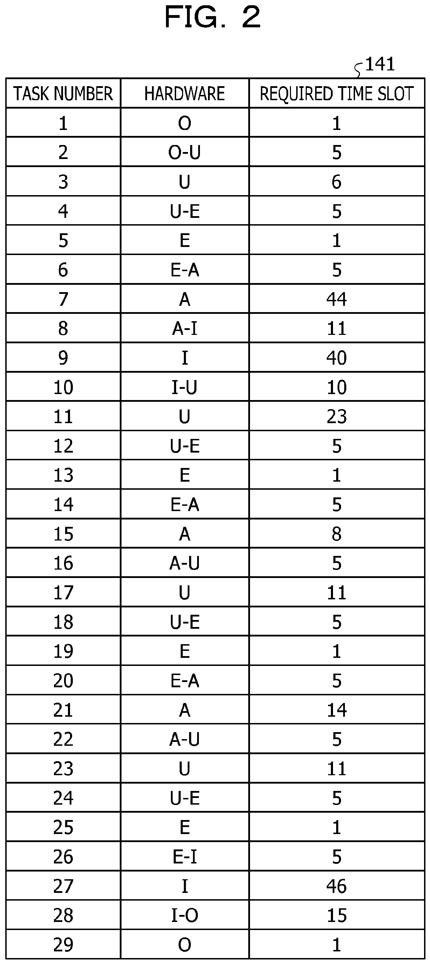

FIG. 2 is a table illustrating an example of implementation information. As illustrated in FIG. 2, implementation information 141 associates a task number, hardware, and a required time slot. The task number is a number of a task, and tasks are executed in ascending order of the task numbers. Contents of tasks with different task numbers are individually different, and hardware that executes the corresponding task is also different. In the following description, a task with a task number W will be referred to as a "task W" as appropriate.

In FIG. 2, the hardware shows a type of hardware used by a task. The types of hardware individually correspond to those described in FIG. 1. The required time slot is a time slot required when a corresponding task is executed by corresponding hardware. For example, when Task 1 is executed on the hardware O, the required time slot is "1".

The information processing device according to the present embodiment finds a solution of a production scheduling problem by dividing into two stages of Steps 1 and 2. For example, in Step 1, a task order design is performed on each piece of hardware, and in Step 2, a scheduling design of each task is performed.

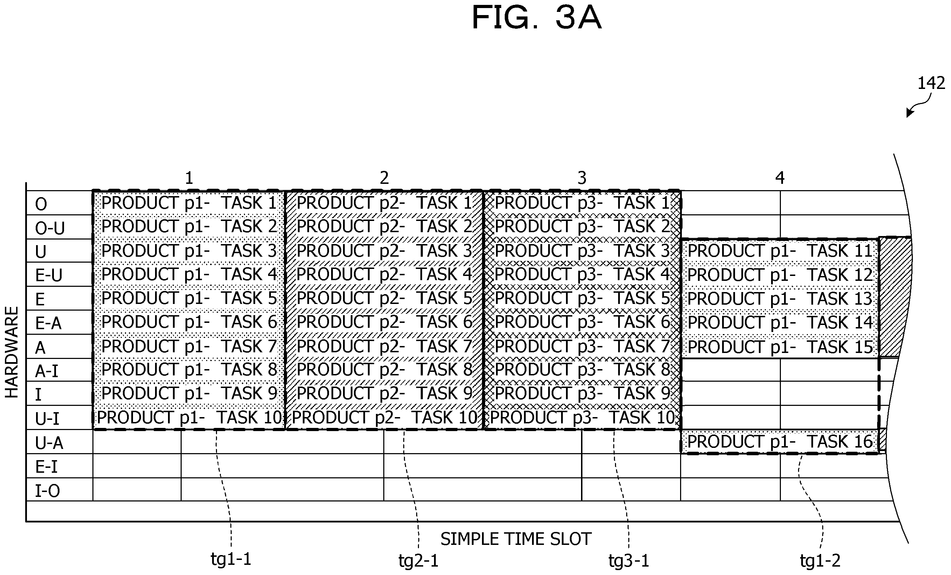

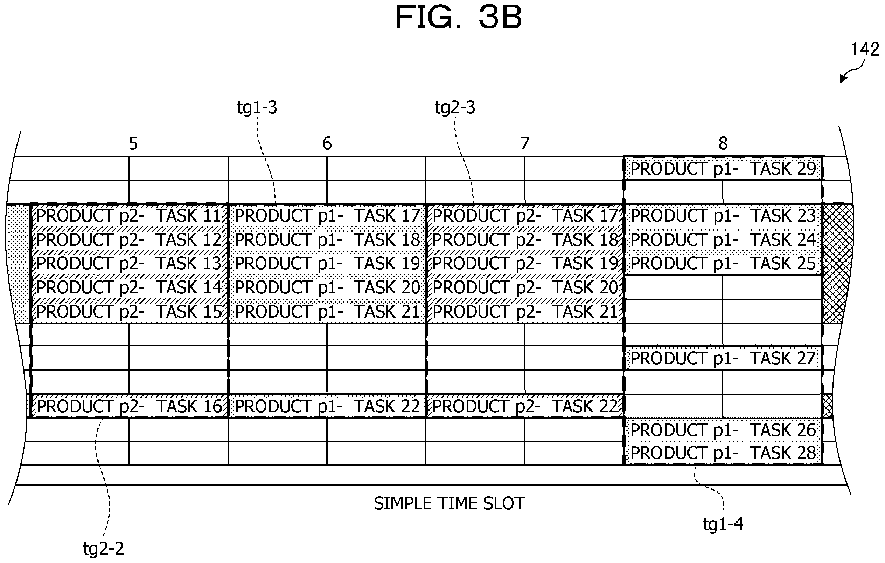

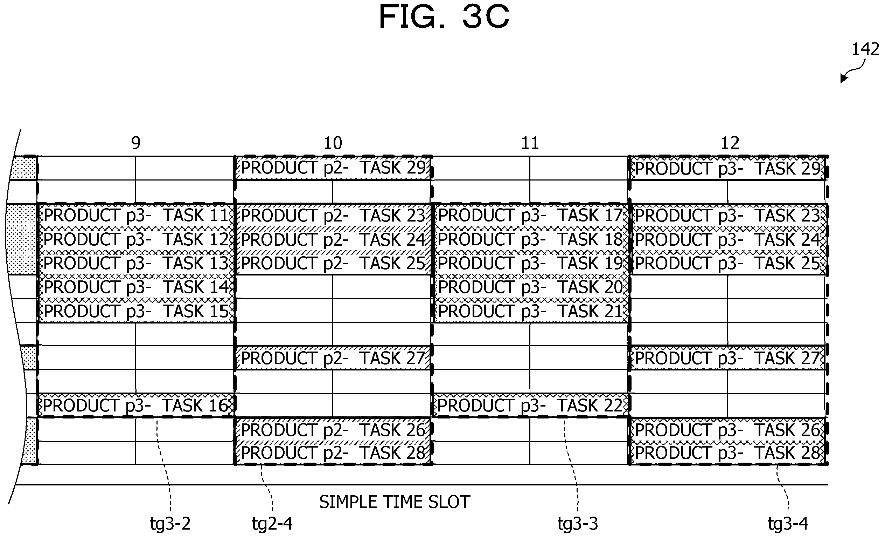

FIG. 3A, FIG. 3B and FIG. 3C are views for explaining Step 1 executed by the information processing device. The information processing device classifies tasks into a plurality of task groups on the basis of the implementation information 141 such that tasks using the same hardware do not belong to the same task group.

In the example illustrated in FIG. 3A, FIG. 3B and FIG. 3C, tasks of the first product p1 are classified into task groups tg1-1 to tg1-4. Tasks of the second product p2 are classified into task groups tg2-1 to tg2-4. Tasks of the third product p3 are classified into task groups tg3-1 to tg3-4.

The task group tg1-1 contains Tasks 1 to 10 of the first product p1. The task group tg1-2 contains Tasks 11-16 of the first product p1. The task group tg1-3 contains Tasks 17 to 22 of the first product p1. The task group tg1-4 contains tasks 23 to 29 of the first product p1.

The task group tg2-1 contains Tasks 1 to 10 of the second product p2. The task group tg2-2 contains Tasks 11 to 16 of the second product p2. The task group tg2-3 contains tasks 17 to 22 of the second product p2. The task group tg2-4 contains tasks 23 to 29 of the second product p2.

The task group tg3-1 contains Tasks 1-10 of the third product p3. The task group tg3-2 contains Tasks 11-16 of the third product p3. The task group tg3-3 contains tasks 17 to 22 of the third product p3. The task group tg3-4 contains tasks 23 to 29 of the third product p3.

In consideration of allocation in units of task groups with a time slot executed by each piece of hardware as a fixed simple time slot, the information processing device performs variable-saving modeling by using a basic constraint and a custom constraint. The information processing device obtains a result (task order design information 142) illustrated in FIG. 3A, FIG. 3B and FIG. 3C by finding a solution for the variable-saving modeling. As illustrated in FIG. 3A, FIG. 3B and FIG. 3C, in the task order design information 142, each task group is allocated to the simple time slot in association with a hardware type. For example, the task groups tg1-1, tg2-1, tg3-1, tg1-2, tg2-2, tg1-3, tg2-3, tg1-4, tg3-2, tg2-4, tg3-3, and tg3-4 are allocated for simple time slots 1 to 12.

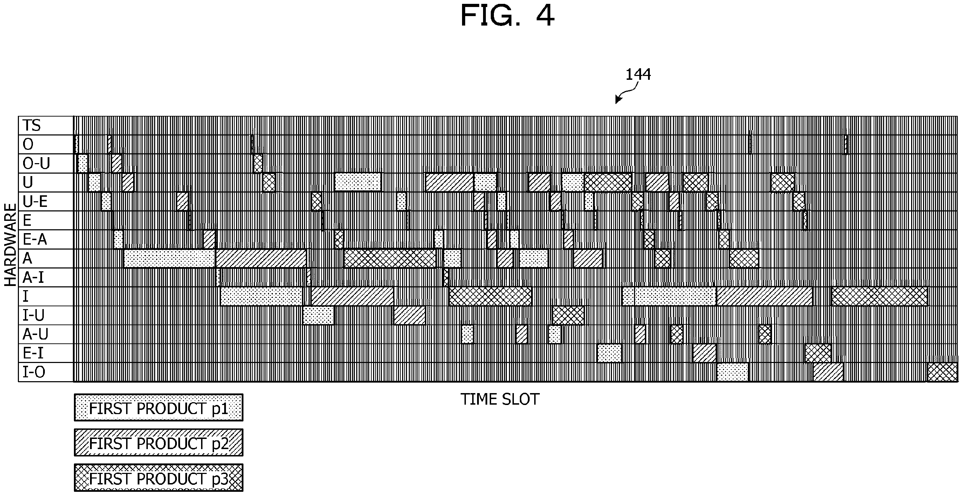

FIG. 4 is a view for explaining Step 2 executed by the information processing device. A horizontal axis of FIG. 4 corresponds to a time slot, and a vertical axis shows a type of hardware. On the basis of a result of Step 1, the information processing device generates schedule information 144 by sequentially allocating time for each piece of hardware from a previous task.

As described above, the information processing device according to the present embodiment performs variable-saving modeling by using the basic constraint and the custom constraint and finds a solution, in consideration of allocation in units of task groups with a time slot executed by each piece of hardware as a fixed simple time slot. The information processing device generates a schedule by sequentially allocating time for each piece of hardware from a previous task, on the basis of a result of the variable-saving modeling solution. This enables suppression of a calculation cost of the schedule.

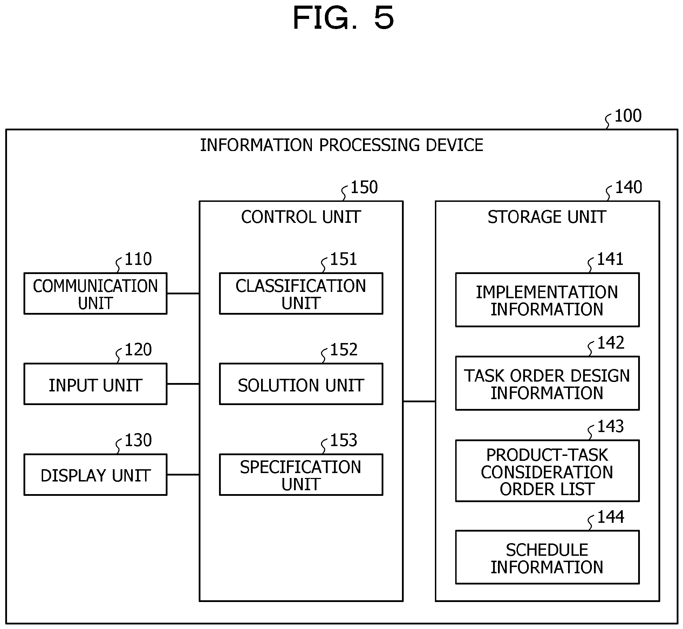

Next, an example of a configuration of the information processing device according to the present embodiment will be described. FIG. 5 is a functional block diagram illustrating a configuration of the information processing device according to the present embodiment. As illustrated in FIG. 5, an information processing device 100 includes a communication unit 110, an input unit 120, a display unit 130, a storage unit 140, and a control unit 150.

The communication unit 110 is connected to an external device or the like by wire or wirelessly, and transmits and receives information to and from the external device or the like. The communication unit 110 is implemented by, for example, a network interface card (NIC) or the like. The communication unit 110 may be connected to a network (not illustrated). The information processing device 100 may acquire the implementation information 141 via the network.

The input unit 120 is an input device that inputs various types of information to the information processing device 100. The input unit 120 corresponds to a keyboard, a mouse, a touch panel, and the like.

The display unit 130 is a display device that displays information outputted from the control unit 150. The display unit 130 corresponds to an organic electro luminescence (EL) display, a liquid crystal display, a touch panel, and the like.

The storage unit 140 has the implementation information 141, the task order design information 142, and the schedule information 144. The storage unit 140 is implemented by, for example, a semiconductor memory element such as a random access memory (RAM) or a flash memory, or a storage device such as a hard disk or an optical disk.

The implementation information 141 is information that defines a relationship between an order of tasks for production of products, a type of hardware used by a task, and a required time slot when a task is executed in hardware. A data structure of the implementation information 141 corresponds to that described in FIG. 2.

The task order design information 142 is information in which a time slot executed by each piece of hardware is set as a fixed simple time slot, and tasks are allocated in units of task groups. The task order design information 142 is generated by a solution unit 152, which will be described later. The task order design information 142 corresponds to that described in FIG. 3A, FIG. 3B and FIG. 3C.

A product-task consideration order list 143 is information that defines an execution order of tasks in combination of products and tasks. The product-task consideration order list 143 is generated by a specification unit 153 described later.

The schedule information 144 is information in which a time slot executed by each piece of hardware is associated with a task. The schedule information 144 is generated by the specification unit 153 described later. The schedule information 144 corresponds to that described in FIG. 4.

The description returns to FIG. 5. The control unit 150 has a classification unit 151, the solution unit 152, and the specification unit 153. The control unit 150 is implemented by, for example, a central processing unit (CPU), a micro processing unit (MPU), or the like. Furthermore, the control unit 150 may be implemented by, for example, an integrated circuit such as an application specific integrated circuit (ASIC), a field programmable gate array (FPGA), or the like.

On the basis of the implementation information 141, the classification unit 151 classifies Tasks 1 to 29 included in the implementation information 141 into a plurality of task groups such that tasks using the same hardware do not belong to the same task group.

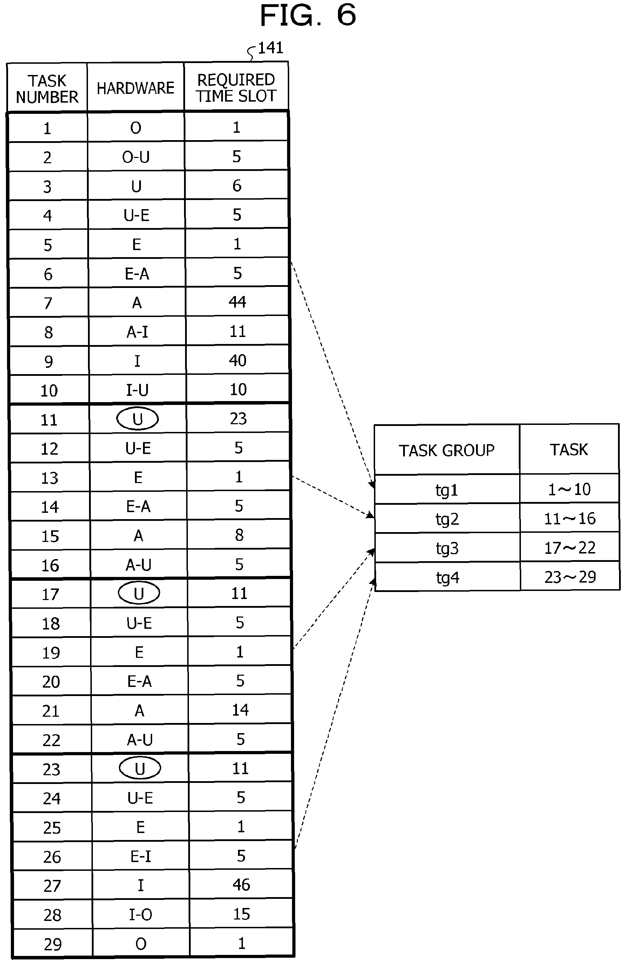

FIG. 6 is a table for explaining processing of the classification unit. The classification unit 151 scans tasks in ascending order of the task numbers, and repeatedly executes a process of, when a task using the same hardware is detected, classifying the task into another task group. As illustrated in FIG. 6, the classification unit 151 starts the process from Task number "1", and classifies Tasks 1 to 10 into the task group tg1 at a time when Task number "11" is reached, since the hardware "U" of Task number "3" and the hardware "U" of Task number "11" match. Furthermore, the classification unit 151 classifies Task 11 into the task group tg2.

The classification unit 151 restarts the process from Task number "11", and classifies Tasks 11 to 16 into the task group tg2 at a time when Task number "17" is reached, since the hardware "U" of Task number "11" and the hardware "U" of Task number "17" match. Furthermore, the classification unit 151 classifies Task 17 into the task group tg3.

The classification unit 151 restarts the process from Task number "17", and classifies Tasks 17 to 22 into the task group tg3 at a time when Task number "23" is reached, since the hardware "U" of Task number "17" and the hardware "U" of Task number "23" match. Furthermore, the classification unit 151 classifies Task 23 into the task group tg4.

The classification unit 151 restarts the process from Task number "23", and the classification unit 151 classifies Tasks 23 to 29 into the task group tg4 at a time when the last task number 29 is reached, since pieces of hardware corresponding to the task numbers 23 to 29 are individually different.

In the present embodiment, it is assumed that the implementation information 141 is given with information on producing three products (same products). The three products are assumed to be products p1, p2, and p3. The products p1 to p3 are produced by same Tasks 1 to 29. The classification unit 151 classifies Tasks 1 to 29 of the products p1 to p3 into task groups by using the results of the processes described in FIG. 6, for Tasks 1 to 29 of products p1 to p3.

The classification unit 151 classifies Tasks 1 to 29 of the product p1 into the task groups tg1-1, tg1-2, tg1-3, and tg1-4. Tasks 1 to 29 of the product p2 are classified into the task groups tg2-1, tg2-2, tg2-3, and tg2-4. Tasks 1 to 29 of the product p3 are classified into the task groups tg3-1, tg3-2, tg3-3, and tg3-4.

The task groups tg1-1, tg2-1, and tg3-1 contain Tasks 1 to 10. The task groups tg1-2, tg2-2, and tg3-2 contain Tasks 11 to 16. The task groups tg1-3, tg2-3, and tg3-3 contain Tasks 17 to 22. The task groups tg1-4, tg2-4, and tg3-4 contain Tasks 23 to 29.

Furthermore, the classification unit 151 calculates the number of simple time slots on the basis of the number of products to be produced and the number of task groups per product. In the present embodiment, the number of products to be produced is "3". Furthermore, as described in FIG. 6, the number of task groups per product is "4". The classification unit 151 calculates the number of simple time slots "12" by multiplying the number of products "3" by the number of task groups "4" per product. In other words, for example, the simple time slot t = 1 to 12 is obtained.

The classification unit 151 outputs information on the task groups and information on the simple time slot obtained by the processing described above, to the solution unit 152.

The solution unit 152 sets a fixed-length simple time slot in which each task group occupies hardware, and defines a table that indicates a relationship between a hardware type and the simple time slot. An initial state of such a table is the one before each task group is arranged in the task order design information 142 described in FIG. 3A, FIG. 3B and FIG. 3C, in which a vertical axis is the hardware type, and a horizontal axis is the simple time slot. A range of the simple time slot t is to be t = 1 to 12 by the calculation with the classification unit 151 described above.

The solution unit 152 generates the task order design information 142, by finding a solution of arrangement (variable) in the table of each task group such that a value of an objective function is minimized while the basic constraint and custom constraint are satisfied.

First, the objective function is described. An objective function F is defined by Equation (1).
[Formula 1]

$$F = \sum_{p \in P} \sum_{t \in T} \sum_{tg \in TG} Cost_p \cdot T_t \cdot x_{p,tg}^t \qquad \cdots (1)$$

In Equation (1), $Cost_p$ is a function whose value is determined in accordance with how much the task groups of the individual products p1 to p3 are mixed in the plurality of task groups arranged in a time axis direction. The value of $Cost_p$ becomes smaller as the task groups of the individual products p1 to p3 are mixed more. For $T_t$, an integer value (1 to 12) of the simple time slot t is set.

In Equation (1), $x_{p,tg}^t$ is a variable, and the value will be "1" if the task group tg of product p is arranged in the simple time slot t, and the value will be "0" if it is not arranged. The number of variables $x_{p,tg}^t$ is to be a calculation result of "the number of simple time slots × the number of products × task group", and the number of variables may be significantly reduced as compared with the related art.

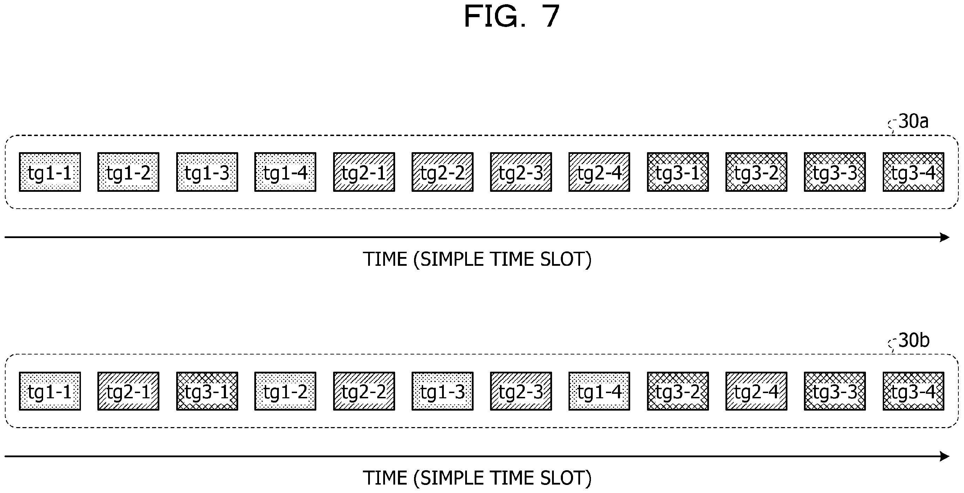

FIG. 7 is a view for explaining a relationship between a value of an objective function and an arrangement order of each task group. In an arrangement order 30a illustrated in FIG. 7, the task groups are arranged in the order of tg1-1, tg1-2, tg1-3, tg1-4, tg2-1, tg2-2, tg2-3, tg2-4, tg3-1, tg3-2, tg3-3, and tg3-4 in the time axis direction. In an arrangement order 30b, the task groups are arranged in the order of tg1-1, tg2-1, tg3-1, tg1-2, tg2-2, tg1-3, tg2-3, tg1-4, tg3-2, tg2-4, tg3-3, and tg3-4 in the time axis direction.

Comparing the arrangement order 30a and the arrangement order 30b, the task groups of each product are mixed more in the arrangement order 30b than in the arrangement order 30a. In other words, for example, a value of the objective function corresponding to the arrangement order 30b is smaller than a value of the objective function corresponding to the arrangement order 30a.

Next, the "basic constraint" will be described. Equations of the basic constraint are Equation (2), Equation (3), Equation (4), and Equation (5).
[Formula 2]

$$\sum_{t \in T} x_{p,tg}^t = 1 \qquad \cdots (2)$$

$$(\forall p \in P, \forall tg \in TG)$$

[Formula 3]

$$\sum_{t \in T} T_t \cdot x^t_{p,tg1} \leq \sum_{t \in T} T_t \cdot x^t_{p,tg2} \qquad \cdots (3)$$

$$\left( \forall p \in P, \forall tg1, tg2 \in TG, \left( N_{tg1} + 1 = N_{tg2} \right) \right)$$

[Formula 4]

$$\sum_{t \in T} T_t \cdot x^t_{p1,tg1} \leq \sum_{t \in T} T_t \cdot x^t_{p2,tg} \qquad \cdots (4)$$

$$\left( \forall tg \in TG, \forall p1, p2 \in P, \left( N_{p1} + 1 = N_{p2} \right) \right)$$

[Formula 5]

$$\sum_{p \in P} \sum_{tg \in TG} I^m_{tg} \cdot x^t_{p,tg1} \leq 1 \qquad \cdots (5)$$

$$\left( \forall m \in M, \forall t \in T \right)$$

Equation (2) shows a constraint that the task group tg of each product p (p1 to p3) always appears in only one place somewhere in the table (task order design information 142).

Equation (3) indicates a constraint that overtaking of the task group tg is inhibited (the same management slot is allowed) in the same product p. For example, Equation (3) limits a value of the simple time slot in which the task group tg1-2 is arranged to be larger than a value of the simple time slot in which the task group tg1-1 is arranged.

Equation (4) shows a constraint that overtaking of the product p in the same task group tg is inhibited. This basic constraint is a condition that the order of tasks is maintained in the same task group. For example, for Tasks 1 to 10 contained in the task group tg1-1, Equation (4) prevents Task 1 from being executed after Tasks 2 to 10.

Equation (5) indicates a constraint that only one task group can occupy each piece of hardware (a machine m) and each simple time slot t.

Next, the "custom constraint" will be described. Equations of the custom constraint are Equation (6), Equation (7), Equation (8), Equation (9), Equation (10), Equation (11), and Equation (12).

[Formula 6]

$$-\left(2 - x^t_{px,tg4} - x^{t+1}_{py,tg2}\right) + 1 \leq x^{t+2}_{px,tg5} \qquad \cdots (6)$$

[Formula 7]

$$-\left(2 - x^t_{px,tg5} - x^{t+1}_{py,tg2}\right) + 1 \leq x^{t+2}_{px,tg6} \qquad \cdots (7)$$

[Formula 8]

$$-\left(3 - x^t_{px,tg2} - x^{t+1}_{py,tg2} - x^{t+2}_{pz,tg245}\right) + 1 \leq x^{t+3}_{px,tg4} \qquad \cdots (8)$$

[Formula 9]

$$BigM \cdot \left(2 - x_{p,tg45}^{t} - x_{p,tg56}^{t+x}\right) + 1$$

$$\geq \sum_{t<t2<t+x} \sum_{pk \in P(pk \neq j)} \sum_{tg245} x_{pk,tg245}^{t2} \qquad \cdots (9)$$

[Formula 10]

$$BigM \cdot \left(3 - x_{p1,tg2}^{t} - x_{p2,tg2}^{t+1} - x_{p1,tg4}^{t+x}\right) + 1$$

$$\geq \sum_{t<t2<t+x} \sum_{pk \in P(pk \neq p1,p2)} \sum_{tg245} x_{pk,tg245}^{t2} \qquad \cdots (10)$$

[Formula 11]

$$\left(x_{p,tg2}^{t} + x_{p,tg4}^{t+1}\right) = 1 \qquad \cdots (11)$$

[Formula 12]

$$BigM \cdot \left(2 - x_{p,tg2}^{t} - x_{p,tg4}^{t+x}\right)$$

$$\geq \sum_{t<t2<t+x} \sum_{pk \in P(pk \neq p-1,p,p+1)} \sum_{tg2456} x_{pk,tg2456}^{t2} \qquad \cdots (12)$$

Equation (6) indicates a constraint that, when any of Task groups (2), (4), and (5) of another product py is entered immediately after Task group (4) of a product px, Task group (5) of the product px is to be entered immediately after. Note that, it is assumed that tasks and the order of the tasks contained in Task group (n) of the product px and Task group (n) of the product px are the same. This similarly applies to the following descriptions.

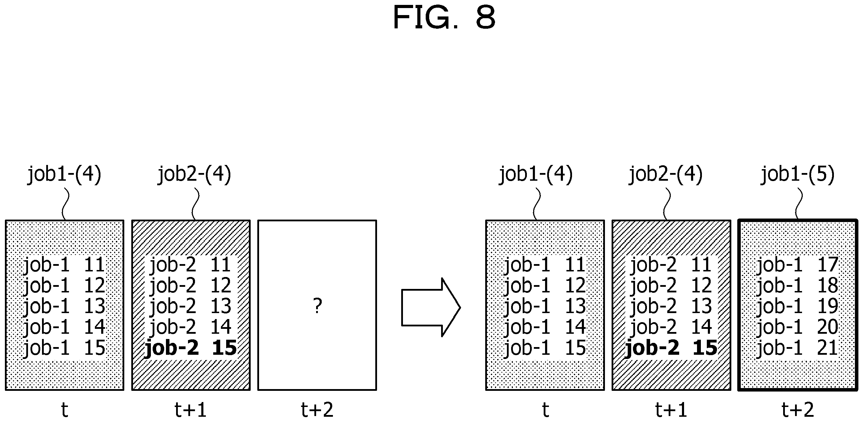

FIG. 8 is a view for explaining the custom constraint of Equation (6). In the example illustrated in FIG. 8, a task group "job1-(4)" of the product px is entered in a simple time slot t, and a task group "job2-(4)" of the product py is entered in a simple time slot t + 1. In this case, due to the custom constraint of Equation (6), a task group "job1-(5)" of the product px is entered in a simple time slot t + 2.

Equation (7) indicates a constraint that, when any of Task groups (2), (4), and (5) of another product py is entered immediately after Task group (5) of the product px, Task group (6) of the product px is to be entered immediately after.

Equation (8) indicates a constraint that, when Task groups (2) of the product px and py are successively entered, and any of Task groups (2), (4), and (5) of another product pz is entered immediately after, Task group (4) of the product px is entered immediately after.

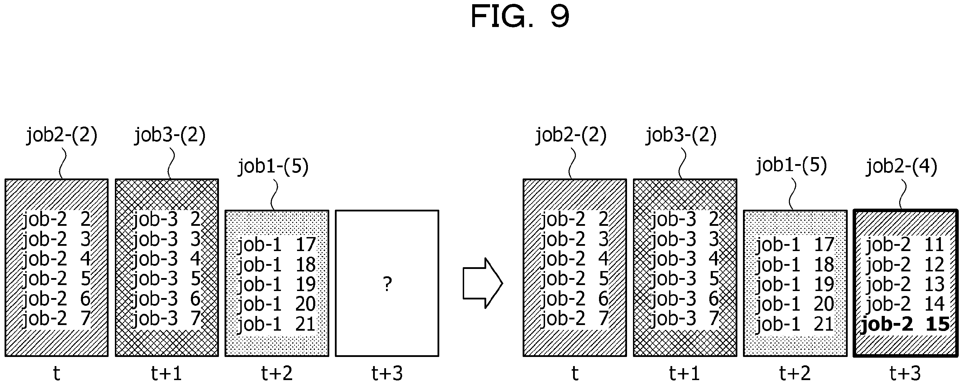

FIG. 9 is a view for explaining the custom constraint of Equation (8). In the example illustrated in FIG. 9, a task group "job2-(2)" of the product px is entered in the simple time slot t, a task group "job3-(2)" of the product py is entered in the simple time slot t + 1, and a task group "job1-(5)" of the product pz is entered in the simple time slot t + 2. In this case, due to the custom constraint of Equation (8), a task group "job2-(4)" of the product px is entered in a simple time slot t + 3.

Equation (9) indicates a constraint that only up to one of Task schedules (2), (4), and (5) of another product can be entered between Task groups (4) and (5) of the product p, or between Task groups (5) and (6).

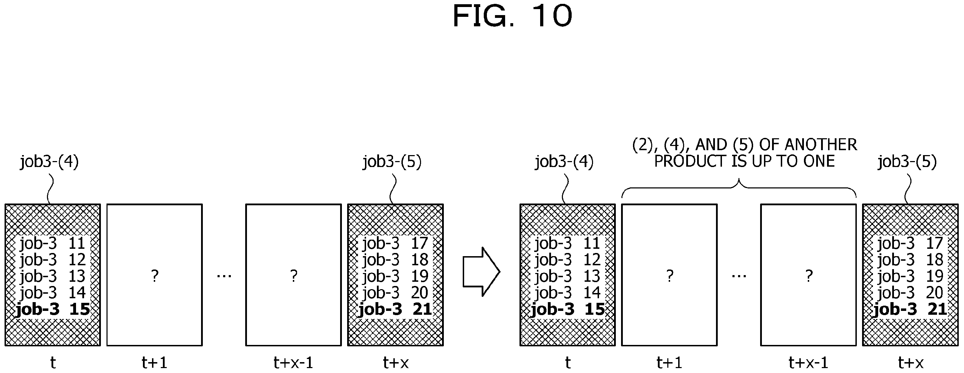

FIG. 10 is a view for explaining the custom constraint of Equation (9). In the example illustrated in FIG. 10, a task group "job3-(4)" of the product p is entered in the simple time slot t, and a task group "job3-(5)" of the product p is entered in a simple time slot t + x. In this case, only up to one of Task group (2), (4), and (5) of another product can be entered in the simple time slots t + 1 to t + x - 1.

Equation (10) indicates a constraint that, when Task groups (2) of products px and py are successively entered, only up to one of Task groups (2), (4), and (5) of another product can be entered between with Task group (4) of the product px.

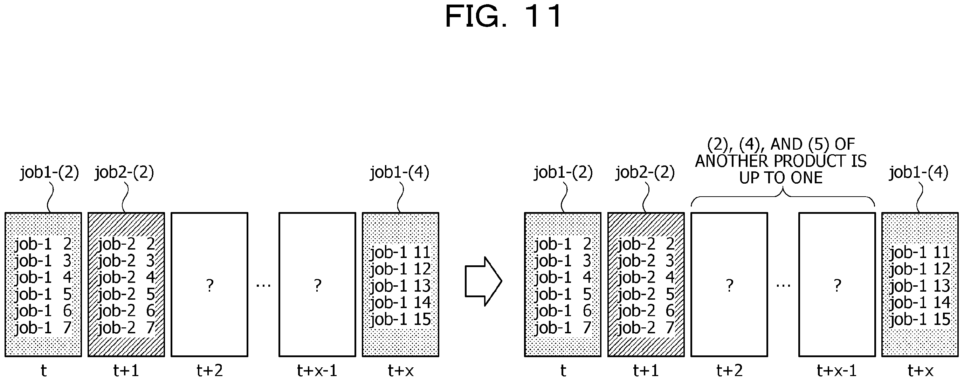

FIG. 11 is a view for explaining the custom constraint of Equation (10). In the example illustrated in FIG. 11, a task group "job1-(2)" of the product px is entered in the simple time slot t, a task group "job1-(2)" of the product py is entered in the simple time slot t + 1, and a task group "job1-(4)" of the product px is entered in the simple time slot t + x. In this case, on the basis of Equation (10), only up to one of Task group (2), (4), and (5) of another product can be entered in the simple time slots t + 2 to t + x - 1.

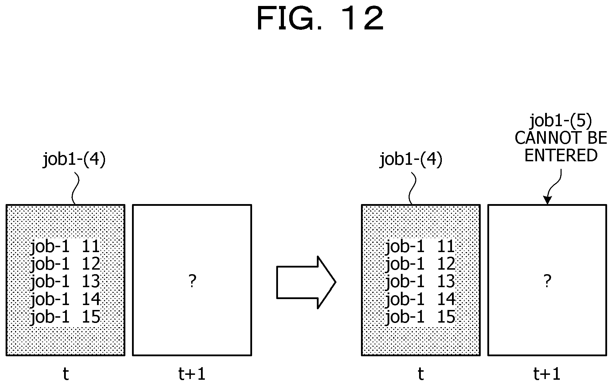

Equation (11) indicates a constraint that continuity is inhibited. For example, Task groups (2), (4), (5), and (6) of the same product cannot be entered continuously. FIG. 12 is a view for explaining the custom constraint of Equation (11). For example, when the task group "job1-(4)" is entered in the simple time slot t, the task group "job1-(5)" cannot be entered in the simple time slot t + 1.

Equation (12) indicates a constraint that the number of product types that can be entered between Task groups (2) and (4) of the product is up to two. Furthermore, products that can be entered between Task groups (2) and (4) of the first product are limited to the following products only. After that, for even-numbered products (2, 5, 6, ...), only the products before and after themselves can interrupts, and for odd-numbered products (1, 3, 5, ...), the two products before themselves can interrupts.

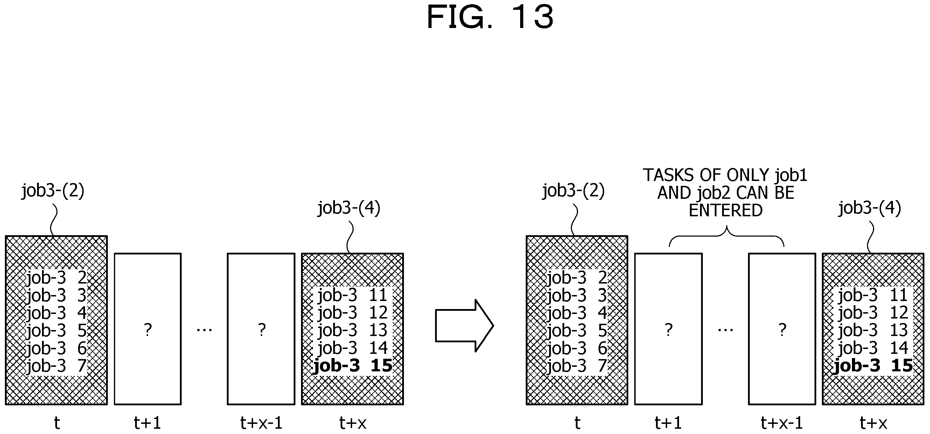

FIG. 13 is a view for explaining the custom constraint of Equation (12). In the example illustrated in FIG. 13, a task group "job3-(2)" is entered in the simple time slot t, and a task group "job3-(4)" is entered in the simple time slot t + x. In this case, on the basis of Equation (12), only the tasks of job1 or job2 can be entered in the simple time slots t + 1 to t + x-1.

The solution unit 152 adjusts the variable $x^t_{p, tg}$ under the condition that the basic constraint (Equations (1) to (5)) and the custom constraint (Equations (6) to (12)) described above are satisfied, and finds a solution of the variables $x^t_{p, tg}$ that minimize a value of the objective function. For example, the solution unit 152 uses a mathematical planning solver to find the solution. A result of the solution finding is to be the task order design information 142 described in FIG. 3A, FIG. 3B and FIG. 3C.

As illustrated in FIG. 3A, FIG. 3B and FIG. 3C, the solution unit 152 arranges the task group tg1-1 of the product p1 in the simple time slot t = 1. In the task group tg1-1, Tasks 1 to 10 are allocated to hardware O, O-U, U, E-U, E, E-A, A, A-I, I, and U-I, respectively.

The solution unit 152 arranges the task group tg2-1 of the product p2 in the simple time slot t = 2. In the task group tg2-1, Tasks 1 to 10 are allocated to the hardware O, O-U, U, E-U, E, E-A, A, A-I, I, and U-I, respectively.

The solution unit 152 arranges the task group tg3-1 of the product p3 in the simple time slot t = 3. In the task group tg3-1, Tasks 1 to 10 are allocated to the hardware O, O-U, U, E-U, E, E-A, A, A-I, I, and U-I, respectively.

The solution unit 152 arranges the task group tg1-2 of the product p1 in the simple time slot t = 4. In the task group tg1-2, Tasks 11 to 16 are allocated to the hardware U, E-U, E, E-A, A, and U-A, respectively.

The solution unit 152 arranges the task group tg2-2 of the product p2 in the simple time slot t = 5. In the task group tg2-2, Tasks 11 to 16 are allocated to the hardware U, E-U, E, E-A, A, and U-A, respectively.

The solution unit 152 arranges the task group tg1-3 of the product p1 in the simple time slot t = 6. In the task group tg1-3, Tasks 17 to 22 are allocated to the hardware U, E-U, E, E-A, A, and U-A, respectively.

The solution unit 152 arranges the task group tg2-3 of the product p2 in the simple time slot t = 7. In the task group tg2-3, Tasks 17 to 22 are allocated to the hardware U, E-U, E, E-A, A, and U-A, respectively.

The solution unit 152 arranges the task group tg1-4 of the product p1 in the simple time slot t = 8. In the task group tg1-4, Tasks 29, 23 to 25, 27, 26, and 28 are allocated to the hardware O, U, E-U, E, I, E-I, and I-O, respectively.

The solution unit 152 arranges the task group tg3-2 of the product p3 in the simple time slot t = 9. In the task group tg3-2, Tasks 11 to 16 are allocated to the hardware U, E-U, E, E-A, A, and U-A, respectively.

The solution unit 152 arranges the task group tg2-4 of the product p2 in the simple time slot t = 10. In the task group tg2-4, Tasks 29, 23 to 25, 27, 26, and 28 are allocated to the hardware O, U, E-U, E, I, E-I, and I-O, respectively.

The solution unit 152 arranges the task group tg3-3 of the product p3 in the simple time slot t = 11. In the task group tg3-3, Tasks 17 to 22 are allocated to the hardware U, E-U, E, E-A, A, and U-A, respectively.

The solution unit 152 arranges the task group tg3-4 of the product p3 in the simple time slot t = 12. In the task group tg3-4, Tasks 29, 23 to 25, 27, 26, and 28 are allocated to the hardware O, U, E-U, E, I, E-I, and I-O, respectively.

The description returns to FIG. 5. The specification unit 153 determines an order of tasks for each product on the basis of the task order design information 142, and allocates a relationship between a task and hardware used by the task in accordance with the determined order, to individually specify a start time (time slot) of each task. The specification unit 153 generates the schedule information 144 by allocating each task to the specified time slot.

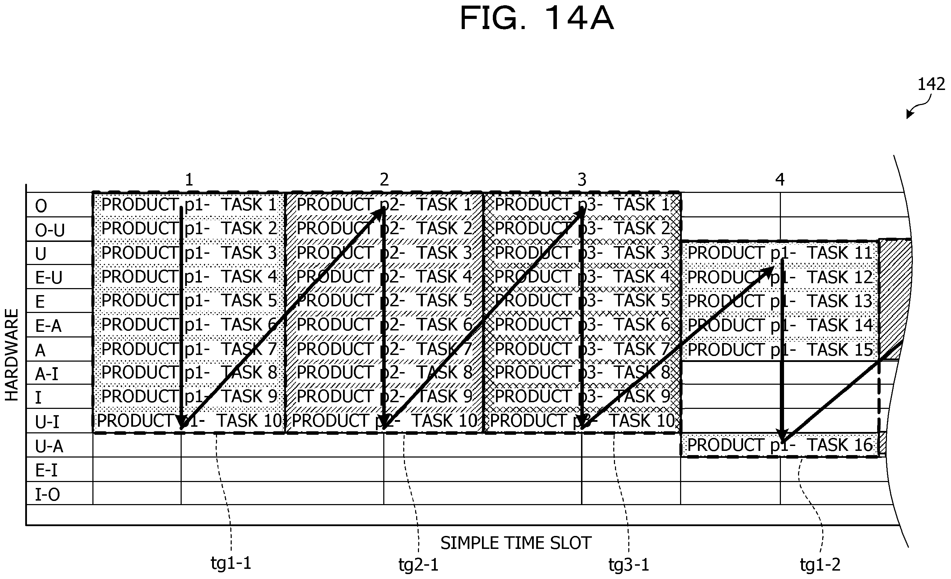

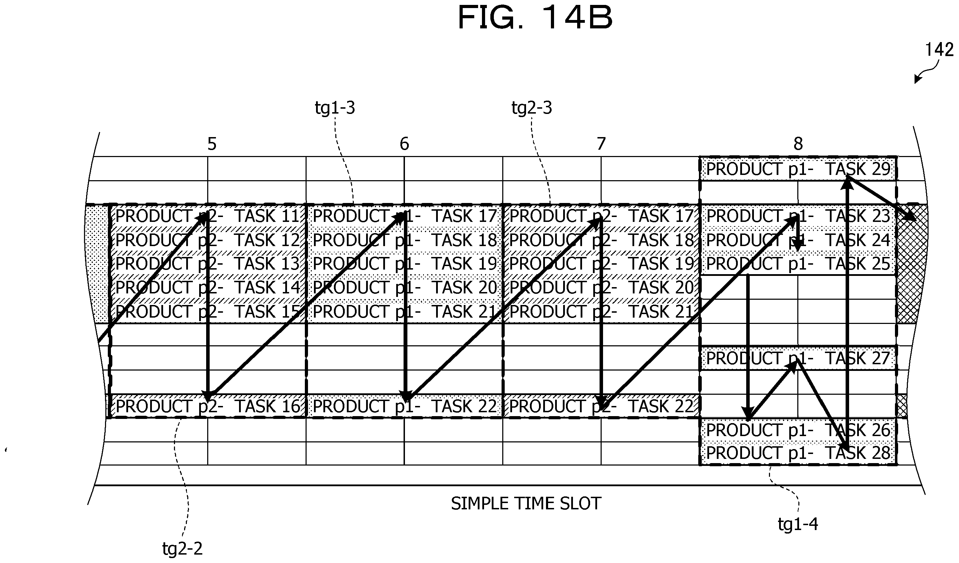

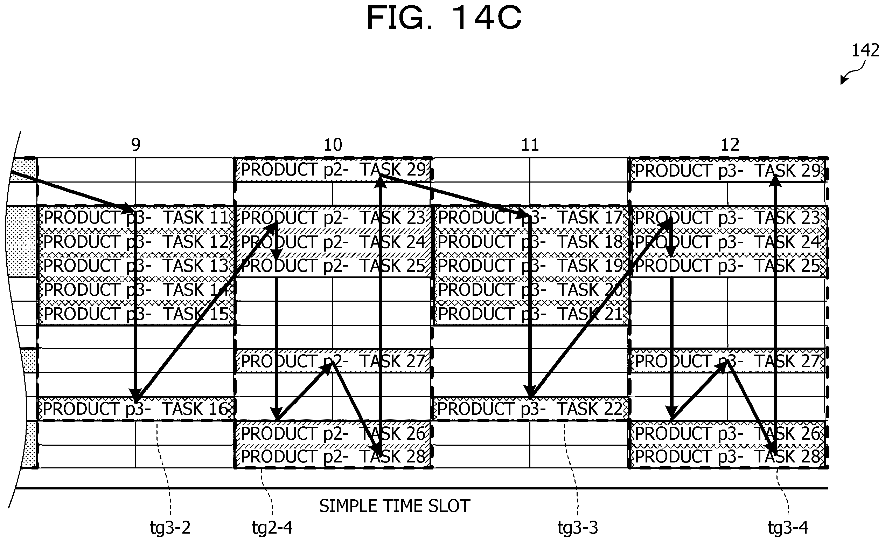

A description is given to an example of a process in which the specification unit 153 individually determines an order of tasks for each product on the basis of the task order design information 142. FIG. 14A, FIG. 14B and FIG. 14C are views for explaining a process in which the specification unit determines an order of tasks. The specification unit 153 selects a task group sequentially from 1 of the simple time slot t. The specification unit 153 adds information associating a product corresponding to the selected task group and a task number, to the product-task consideration order list 143 in ascending order of the task numbers. For example, the specification unit 153 executes the following process.

The specification unit 153 selects the task group tg1-1 of the simple time slot t = 1. The specification unit 153 adds product p1-task 1, product p1-task 2, ..., product p1-task 10 contained in the task group tg1-1, to the product-task consideration order list 143.

The specification unit 153 selects the task group tg2-1 of the simple time slot t = 2. The specification unit 153 adds product p2-task 1, product p2-task 2, ..., product p2-task 10 contained in the task group tg2-1, to the product-task consideration order list 143.

The specification unit 153 selects the task group tg3-1 of the simple time slot t = 3. The specification unit 153 adds product p3-task 1, product p3-task 2, ..., product p3-task 10 contained in the task group tg3-1, to the product-task consideration order list 143.

The specification unit 153 selects the task group tg1-2 of the simple time slot t = 4. The specification unit 153 adds product p1-task 11, product p1-task 12, ..., product p1-task 16 contained in the task group tg1-2, to the product-task consideration order list 143.

The specification unit 153 selects the task group tg2-2 of the simple time slot t = 5. The specification unit 153 adds product p2-task 11, product p2-task 12, ..., product p2-task 16 contained in the task group tg2-2, to the product-task consideration order list 143.

The specification unit 153 selects the task group tg1-3 of the simple time slot t = 6. The specification unit 153 adds product p1-task 17, product p1-task 18, ..., product p1-task 22 contained in the task group tg1-3, to the product-task consideration order list 143.

The specification unit 153 selects the task group tg2-3 of the simple time slot t = 7. The specification unit 153 adds product p2-task 17, product p2-task 18, ..., product p2-task 22 contained in the task group tg2-3, to the product-task consideration order list 143.

The specification unit 153 selects the task group tg1-4 of the simple time slot t = 8. The specification unit 153 adds product p1-task 23, product p1-task 24, ..., product p1-task 29 contained in the task group tg1-4, to the product-task consideration order list 143.

The specification unit 153 selects the task group tg3-2 of the simple time slot t = 9. The specification unit 153 adds product p3-task 11, product p3-task 12, ..., product p3-task 16 contained in the task group tg3-2, to the product-task consideration order list 143.

The specification unit 153 selects the task group tg2-4 of the simple time slot t = 10. The specification unit 153 adds product p2-task 23, product p2-task 24, ..., product p2-task 29 contained in the task group tg2-4, to the product-task consideration order list 143.

The specification unit 153 selects the task group tg3-3 of the simple time slot t = 11. The specification unit 153 adds product p3-task 17, product p3-task 18, ..., product p3-task 22 contained in the task group tg3-3, to the product-task consideration order list 143.

The specification unit 153 selects the task group tg3-4 of the simple time slot t = 12. The specification unit 153 adds product p3-task 23, product p3-task 24, ..., product p3-task 29 contained in the task group tg3-4, to the product-task consideration order list 143.

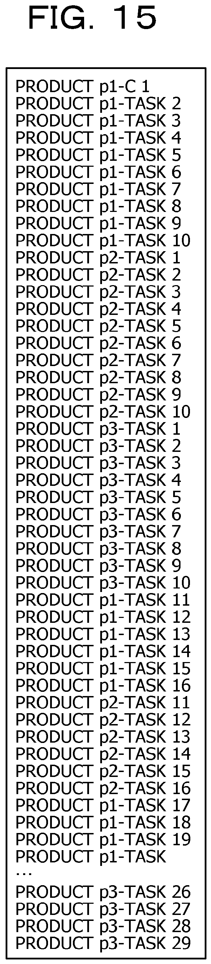

By the specification unit 153 executing the process described in FIG. 14A, FIG. 14B and FIG. 14C, the product-task consideration order list 143 illustrated in FIG. 15 is generated. FIG. 15 is a view illustrating an example of the product-task consideration order list.

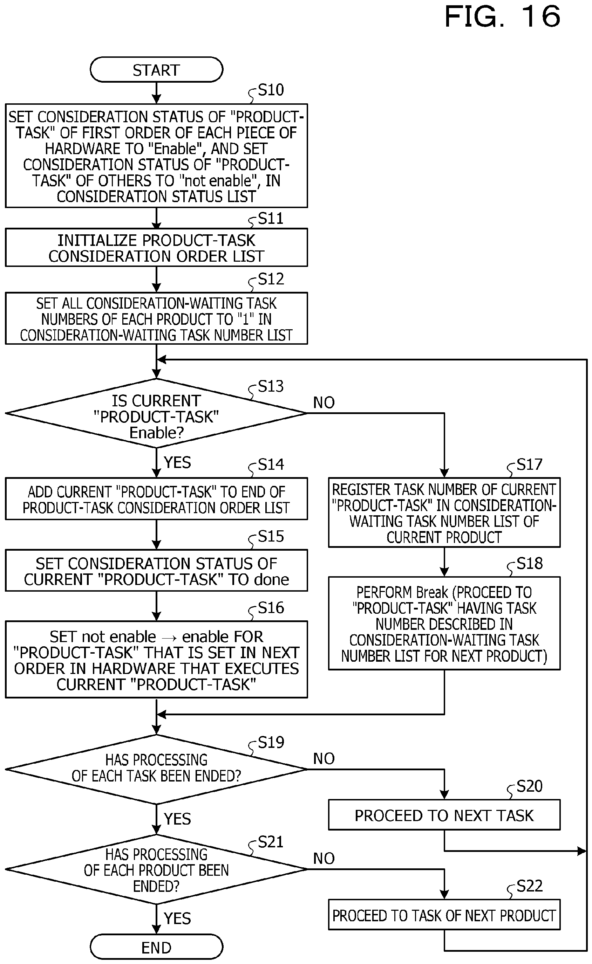

FIG. 16 is a flowchart illustrating a processing procedure in which the specification unit determines an order of tasks. As illustrated in FIG. 16, the specification unit 153 sets a consideration status of "product-task" of the first order of each piece of hardware to "Enable", and sets a consideration status of "product-task" of others to "not enable" (step S10).

The specification unit 153 initializes the product-task consideration order list 143 (step S11). The specification unit 153 sets all consideration-waiting task numbers of each product to "1" in the consideration-waiting task number list (step S12).

If the current "product-task" is Enable (step S13, Yes), the specification unit 153 proceeds to step S14. If the current "product-task" is not Enable (steps S13, No), the specification unit 153 proceeds to step S17.

Step S14 will be described. The specification unit 153 adds the current "product-task" to the end of the product-task consideration order list 143 (step S14). The specification unit 153 sets the consideration status of the current "product-task" to done, in the consideration status (step S15).

The specification unit 153 sets not enable to enable for "product-task" that is set in the next order in the hardware that executes the current "product-task" (step S16), and proceeds to step S19.

Step S17 will be described. The specification unit 153 registers a task number of the current "product-task" in the consideration-waiting task number list of the current product (step S17). The specification unit 153 performs break (proceeds to "product-task" having a task number described in the consideration-waiting task number list for the next product) (step S18).

Step S19 will be described. If the processing of each task has not been ended (step S19, No), the specification unit 153 proceeds to the next task (step S20), and proceeds to step S13.

If the processing for each task has been ended (step S19, Yes), the specification unit 153 determines whether or not the processing for each product has been ended (step S21). If the processing for each product has not been ended (step S21, No), the specification unit 153 proceeds to a task of the next product (step S22), and proceeds to step S13.

Whereas, if the processing for each product has been ended (step S21, Yes), the specification unit 153 ends the process for determining the order of the tasks. By the specification unit 153 executing the process of FIG. 16 for the task order design information 142 described in FIG. 3A, FIG. 3B and FIG. 3C and the like, the product-task consideration order list 143 described in FIG. 15 is generated.

Subsequently, a description is given to an example of a process of individually specifying a start time of each task, by the specification unit 153 allocating a relationship between a task and hardware used by the task on the basis of the product-task consideration order list 143.

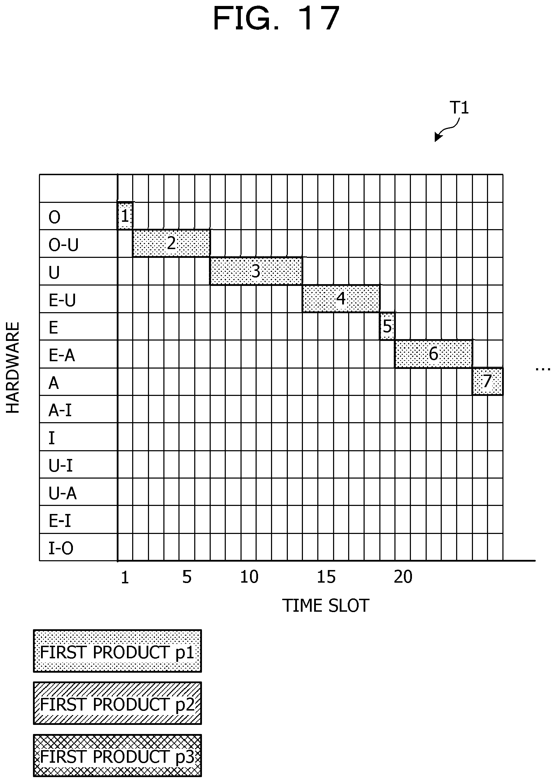

FIG. 17, FIG. 18, FIG. 19, and FIG. 20 are views for explaining a process in which the specification unit individually specifies a start time of each task. FIG. 17 will be described. The specification unit 153 extracts a pair of a product and a task from the head of the product-task consideration order list 143, and sets the pair in a table T1. A vertical axis of the table T1 corresponds to a type of hardware, and a horizontal axis corresponds to a time slot.

For example, the specification unit 153 acquires "product p1-task 1" from the product-task consideration order list 143. Since Task 1 has the required time slot of "1" and the hardware "O", the specification unit 153 arranges Task 1 of the product p1 in Time slot "1" corresponding to the hardware O of the table T1.

The specification unit 153 acquires "product p1-task 2" from the product-task consideration order list 143. Since Task 2 has the required time slot of "5" and the hardware "O-U", the specification unit 153 arranges Task 2 of the product p1 in Time slots "2 to 6" corresponding to the hardware O-U of the table T1.

The specification unit 153 repeatedly executes the process described above until the product type to be read from the product-task consideration order list 143 is switched.

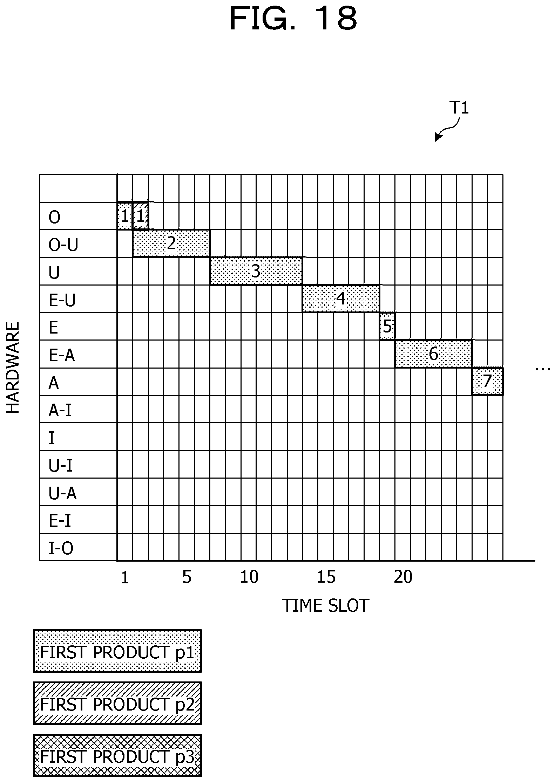

FIG. 18 will be described. Here, a case where the specification unit 153 acquires "product p2-task 1" from the product-task consideration order list 143 will be described. Task 1 has the required time slot of "1" and the hardware "O". The specification unit 153 arranges Task 1 of the product p2 in Time slot "2" next to Task 1 of the product p1.

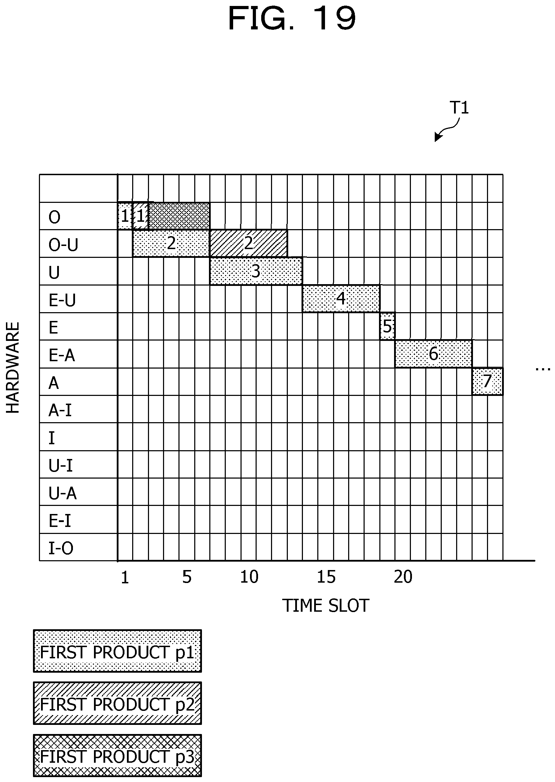

FIG. 19 will be described. A case where the specification unit 153 acquires the "product p2-task 2" next to the "product p2-task 1" from the product-task consideration order list 143 will be described. Task 2 has the required time slot of "5" and the hardware "O-U". The specification unit 153 arranges Task 2 of the product p2 in Time slots "7 to 11" next to Task 2 of the product p1. Furthermore, the specification unit 153 extends Task 1 of the product p2 to Time slot "6", and makes Time slot "6" at which Task 1 ends to be continuous with Time slot "7" at which Task 2 starts. Time slots 3 to 6 of Task 1 of product p2 are a standby time.

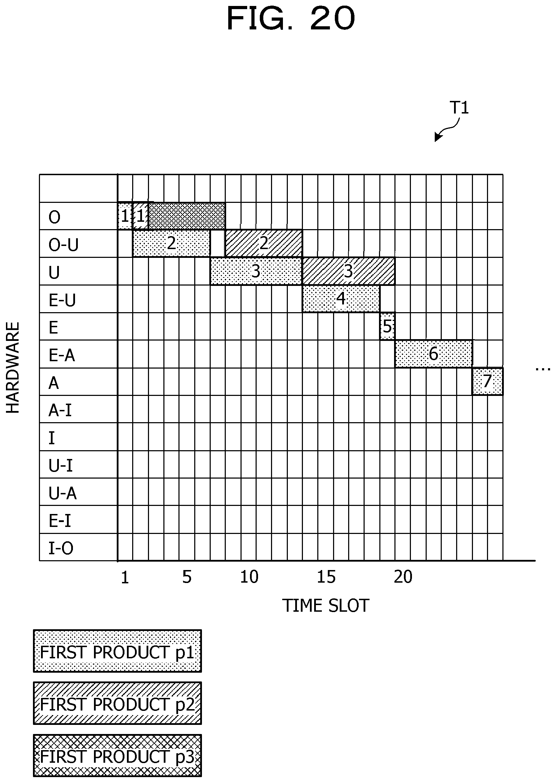

FIG. 20 will be described. A case where the specification unit 153 acquires the "product p2-task 3" next to the "product p2-task 2" from the product-task consideration order list 143 will be described. Task 3 has the required time slot of "6" and the hardware "U". The specification unit 153 arranges Task 3 of the product p2 in Time slots "13-18" next to Task 3 of the product p1.

Since the hardware O-U is a transmission line, the specification unit 153 moves the time slot backward without extending Task 2, to make Time slot "12" at which Task 2 ends continuous with Time slot "13" at which task 3 starts. The transmission line is to move between hardware with a fixed time slot, and thus cannot be extended. This similarly applies to other transmission lines (transmission lines E-U, E-A, A-1, U-I, U-A, E-I, and I-O). Therefore, the specification unit 153 extends Task 1 of the product p2 to Time slot "7", and makes Time slot "7" at which Task 1 ends to be continuous with Time slot "8" at which Task 2 starts.

The specification unit 153 extracts a pair of a product and a task sequentially from the product-task consideration order list 143, and repeatedly executes the processes described in FIG. 17, FIG. 18, FIG. 19, and FIG. 20, to generate the schedule information 144. In the schedule information 144, the start time of each task corresponding to each of the products p1 to p3 has been specified.

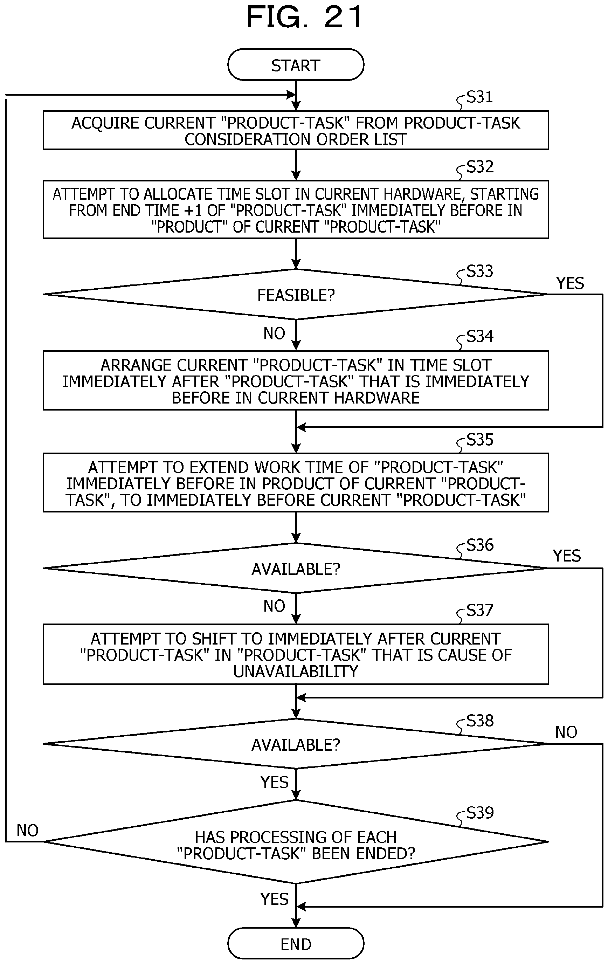

FIG. 21 is a flowchart illustrating a processing procedure in which the specification unit individually specifies a start time of each task. As illustrated in FIG. 21, the specification unit 153 acquires the current "product-task" from the product-task consideration order list 143 (step S31).

The specification unit 153 attempts to allocate a time slot in the current hardware, starting from the end time +1 of "product-task" immediately before in the current "product-task" (step S32). The specification unit 153 proceeds to step S35 when it is feasible (step S33, Yes). Whereas, the specification unit 153 proceeds to step S34 when it is not feasible (step S33, No).

The specification unit 153 arranges the current "product-task" in the time slot immediately after "product-task" immediately before in the current hardware (step S34). The specification unit 153 attempts to extend a work time of the "product-task" immediately before in the product of the current "product-task", to immediately before the current "product-task" (step S35).

If available (step S36, Yes), the specification unit 153 proceeds to step S38. Whereas, if unavailable (step S36, No), the specification unit 153 proceeds to step S37.

The specification unit 153 attempts to shift to immediately after the current "product-task", in the "product-task" that is the cause of the unavailability (step S37). If available (step S38, Yes), the specification unit 153 proceeds to step S39. If unavailable (step S38, No), the specification unit 153 ends the process.

If the processing of each "product-task" has not been ended (step S39, No), the specification unit 153 proceeds to step S31. Whereas, if the processing of each "product-task" has been ended (step S39, Yes), the specification unit 153 ends the process.

The schedule information 144 is generated by the specification unit 153 executing the processing described above.

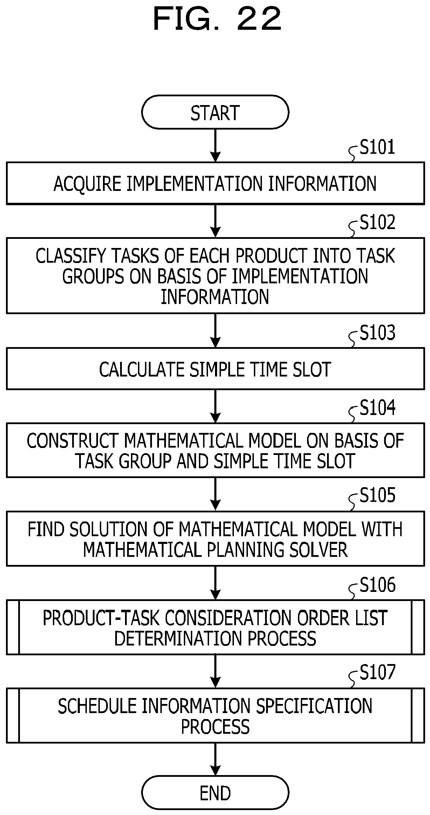

Next, an example of a processing procedure of the information processing device 100 according to the present embodiment will be described. FIG. 22 is a flowchart illustrating a processing procedure of the information processing device according to the present embodiment. As illustrated in FIG. 22, the classification unit 151 of the information processing device 100 acquires the implementation information 141 (step S101).

The classification unit 151 classifies tasks of each product into task groups on the basis of the implementation information 141 (step S102). The classification unit 151 calculates a simple time slot (step S103).

The solution unit 152 of the information processing device 100 constructs a mathematical model on the basis of the task group and the simple time slot (step S104). The solution unit 152 finds a solution of the mathematical model with a mathematical planning solver (step S105).

The specification unit 153 of the information processing device 100 executes a product-task consideration order list determination process (step S106). The specification unit 154 executes a schedule information specification process (step S107).

The product-task consideration order list determination process shown in step S106 of FIG. 22 corresponds to the processing procedure described in FIG. 16. The schedule information specification process shown in step S107 corresponds to the processing procedure described in FIG. 21.

Next, effects of the information processing device 100 according to the present embodiment will be described. The information processing device 100 performs variable-saving modeling by using the basic constraint and the custom constraint and finds a solution, in consideration of allocation in units of task groups with a time slot executed by each piece of hardware as a fixed simple time slot. The information processing device 100 generates a schedule by sequentially allocating time for each piece of hardware from a previous task, on the basis of a result of the variable-saving modeling solution. This enables suppression of a calculation cost of the schedule. For example, the number of variables $x^t_{p, tg}$ used in Equation (1) is to be a calculation result of "the number of simple time slots $\times$ the number of products $\times$ task group", and the number of variables may be significantly reduced as compared with the related art.

Meanwhile, the process of classifying the implementation information 141 into task groups by the classification unit 151 of the information processing device 100 is not limited to the process described in FIG. 6. The classification unit 151 may adjust the tasks contained in the task group on the basis of whether or not the hardware is a transmission line. For example, when the hardware corresponding to the last task of the task group is a transmission line, the classification unit 151 may move such a task to the head of the next task group.

For example, when the classification unit 151 is described with reference to FIG. 6, the classification unit 151 sets Task 10 of the task group tg1 as the first task of the task group tg2. The classification unit 151 sets Task 16 of the task group tg2 as the first task of the task group tg3. The classification unit 151 sets Task 22 of the task group tg3 as the first task of the task group tg4. As a result, the task group tg1 contains Tasks 1 to 9, task group tg2 contains Tasks 10 to 15, task group tg3 contains Tasks 16 to 21, and task group tg4 contains Tasks 22 to 29. This makes it possible to classify task groups whose starting task is the transmission line.

Since the transmission line has no play time and is difficult to be extended as illustrated in FIG. 19 and FIG. 20 and the like, it may be preferable to use the same task group as the next hardware of the transmission line.

Note that the classification unit 151 may execute the process of classifying the tasks into task groups while excluding tasks corresponding to the transmission lines from the tasks of the implementation information 141.

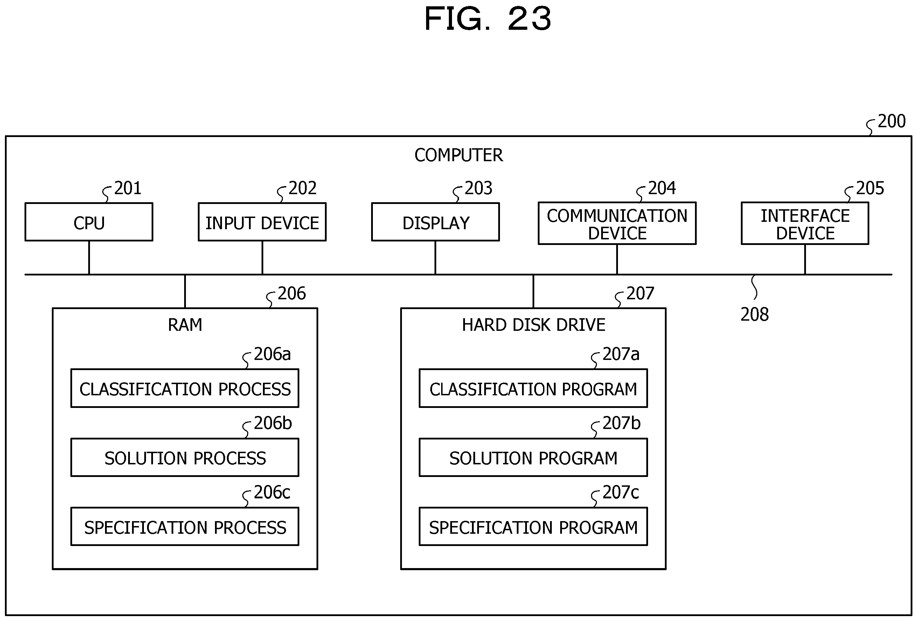

Next, an example of a hardware configuration of a computer that implements functions similar to those of the information processing device 100 shown in the first embodiment described above will be described. FIG. 23 is a diagram illustrating an example of a hardware configuration of a computer that implements functions similar to those of an information processing device according to an embodiment.

As illustrated in FIG. 23, a computer 200 includes a CPU 201 that executes various kinds of calculation processing, an input device 202 that receives data input from a user, and a display 203. Furthermore, the computer 200 has a communication device 204 that exchanges data with an external device or the like via a wired or wireless network, and an interface device 205. Furthermore, the computer 200 includes a RAM 206 that temporarily stores various kinds of information, and a hard disk drive 207. Then, each of the devices 201 to 207 is connected to a bus 208.

The hard disk drive 207 has a classification program 207a, a solution program 207b, and a specification program 207c. Furthermore, the CPU 201 reads the individual programs 207a to 207c, and develops into the RAM 206.

The classification program 207a functions as a classification process 206a. The solution program 207b functions as a solution process 206b. The specification program 207c functions as a specification process 206c.

Processing of the classification process 206a corresponds to the processing of the classification unit 151. Processing of the solution process 206b corresponds to the processing of the solution unit 152. Processing of the specification process 206c corresponds to the processing of the specification unit 153.

Note that the individual programs 207a to 207c may not always be stored in the hard disk drive 207 from the beginning. For example, the individual programs are stored in a "portable physical medium" to be inserted in the computer 200, such as a flexible disk (FD), a compact disc read only memory (CD-ROM), a digital versatile disc (DVD), a magneto-optical disk, and an IC card. Then, the computer 200 may read the individual programs 207a to 207c to execute the programs.

**Claims**

1. An information processing device comprising:

   a classification unit that classifies, based on implementation information that defines a correspondence between an order of a plurality of tasks for production of a plurality of products and a plurality of devices used for the plurality of tasks, for the respective implementation information, the plurality of tasks into a plurality of task groups so that tasks that corresponds to a same device among the plurality of tasks do not belong to a same task group;
   a solution unit that

      sets a time slot in which each of the plurality of task groups occupies each of the plurality of devices,
      sets a table that defines a relationship between a type of each of the devices and a value of the time slot, and arranges each task group in the table based on an objective function whose cost increases when task groups of a same product are arranged continuously, based on a condition that each of a plurality of task groups appear in only one place in the table, a condition that in the plurality of task groups that includes a same order of tasks, a value of a time slot in which a first task group appears in the table is smaller than a value of a time slot in which a second task group with an execution order which is later than an execution order of the first task group appears in the table, a condition that an order of the plurality of tasks is maintained in a same task group, and a condition that one task group appears for a value of one time slot; and

   a specification unit that

      determines an order of all tasks included in the implementation information based on the table, and specifies each of a start time of a task included in the implementation information, by allocating a relationship between each of the tasks and each of the devices used for the tasks based on the order of the all tasks.

2. The information processing device according to claim 1, wherein the classification unit further specifies a number of the simple time slots based on a number of the task groups and a number of the products.

3. The information processing device according to claim 1, wherein

   the devices used for the tasks include a transmission line that connects two different devices, and
   the classification unit further
   classifies into a first task group and a second task group that follows the first task group, and
   when a device used for a last task of the first task group is the transmission line, adds the last task of the first task group to a head of the second task group.

4. A schedule specification method for a computer to execute a process comprising:

   classifying, based on implementation information that defines a correspondence between an order of a plurality of tasks for production of a plurality of products and a plurality of devices used for the plurality of tasks, for the respective implementation information, the plurality of tasks into a plurality of task groups so that tasks that corresponds to a same device among the plurality of tasks do not belong to a same task group;
   setting a time slot in which each of the plurality of task groups occupies each of the plurality of devices;

setting a table that defines a relationship between a type of each of the devices and a value of the time slot; arranging each task group in the table based on an objective function whose cost increases when task groups of a same product are arranged continuously, based on a condition that each of a plurality of task groups appear in only one place in the table, a condition that in the plurality of task groups that includes a same order of tasks, a value of a time slot in which a first task group appears in the table is smaller than a value of a time slot in which a second task group with an execution order which is later than an execution order of the first task group appears in the table, a condition that an order of the plurality of tasks is maintained in a same task group, and a condition that one task group appears for a value of one time slot; determining an order of all tasks included in the implementation information based on the table; and specifying each of a start time of a task included in the implementation information, by allocating a relationship between each of the tasks and each of the devices used for the tasks based on the order of the all tasks.

5. The schedule specification method according to claim 4, wherein the process further comprising specifying a number of the simple time slots based on a number of the task groups and a number of the products.

6. The information processing device according to claim 4, wherein

the devices used for the tasks include a transmission line that connects two different devices, wherein the process further comprising:

classifying into a first task group and a second task group that follows the first task group, and when a device used for a last task of the first task group is the transmission line, adding the last task of the first task group to a head of the second task group is further executed.

7. A schedule specification program that causes at least one computer to execute a process, the process comprising:

classifying, based on implementation information that defines a correspondence between an order of a plurality of tasks for production of a plurality of products and a plurality of devices used for the plurality of tasks, for the respective implementation information, the plurality of tasks into a plurality of task groups so that tasks that corresponds to a same device among the plurality of tasks do not belong to a same task group; setting a time slot in which each of the plurality of task groups occupies each of the plurality of devices; setting a table that defines a relationship between a type of each of the devices and a value of the time slot; arranging each task group in the table based on an objective function whose cost increases when task groups of a same product are arranged continuously, based on a condition that each of a plurality of task groups appear in only one place in the table, a condition that in the plurality of task groups that includes a same order of tasks, a value of a time slot in which a first task group appears in the table is smaller than a value of a time slot in which a second task group with an execution order which is later than an execution order of the first task group appears in the table, a condition that an order of the plurality of tasks is maintained in a same task group, and a condition that one task group appears for a value of one time slot; determining an order of all tasks included in the implementation information based on the table; and specifying each of a start time of a task included in the implementation information, by allocating a relationship between each of the tasks and each of the devices used for the tasks based on the order of the all tasks.

8. The schedule specification program according to claim 7, wherein the process further comprising specifying a number of the simple time slots based on a number of the task groups and a number of the products.

9. The schedule specification program according to claim 7, wherein the devices used for the tasks include a transmission line that connects two different devices, wherein the process further comprising:

classifying into a first task group and a second task group that follows the first task group, and when a device used for a last task of the first task group is the transmission line, adding the last task of the first task group to a head of the second task group is further executed.

# FIG. 1

# FIG. 2

141

| TASK NUMBER | HARDWARE | REQUIRED TIME SLOT |
|:---:|:---:|:---:|
| 1 | O | 1 |
| 2 | O-U | 5 |
| 3 | U | 6 |
| 4 | U-E | 5 |
| 5 | E | 1 |
| 6 | E-A | 5 |
| 7 | A | 44 |
| 8 | A-I | 11 |
| 9 | I | 40 |
| 10 | I-U | 10 |
| 11 | U | 23 |
| 12 | U-E | 5 |
| 13 | E | 1 |
| 14 | E-A | 5 |
| 15 | A | 8 |
| 16 | A-U | 5 |
| 17 | U | 11 |
| 18 | U-E | 5 |
| 19 | E | 1 |
| 20 | E-A | 5 |
| 21 | A | 14 |
| 22 | A-U | 5 |
| 23 | U | 11 |
| 24 | U-E | 5 |
| 25 | E | 1 |
| 26 | E-I | 5 |
| 27 | I | 46 |
| 28 | I-O | 15 |
| 29 | O | 1 |

# FIG. 3A

| HARDWARE | 1 | 2 | 3 | 4 |
|---|---|---|---|---|
| O | PRODUCT p1- TASK 1 | PRODUCT p2- TASK 1 | PRODUCT p3- TASK 1 | |
| O-U | PRODUCT p1- TASK 2 | PRODUCT p2- TASK 2 | PRODUCT p3- TASK 2 | |
| U | PRODUCT p1- TASK 3 | PRODUCT p2- TASK 3 | PRODUCT p3- TASK 3 | PRODUCT p1- TASK 11 |
| E-U | PRODUCT p1- TASK 4 | PRODUCT p2- TASK 4 | PRODUCT p3- TASK 4 | PRODUCT p1- TASK 12 |
| E | PRODUCT p1- TASK 5 | PRODUCT p2- TASK 5 | PRODUCT p3- TASK 5 | PRODUCT p1- TASK 13 |
| E-A | PRODUCT p1- TASK 6 | PRODUCT p2- TASK 6 | PRODUCT p3- TASK 6 | PRODUCT p1- TASK 14 |
| A | PRODUCT p1- TASK 7 | PRODUCT p2- TASK 7 | PRODUCT p3- TASK 7 | PRODUCT p1- TASK 15 |
| A-I | PRODUCT p1- TASK 8 | PRODUCT p2- TASK 8 | PRODUCT p3- TASK 8 | |
| I | PRODUCT p1- TASK 9 | PRODUCT p2- TASK 9 | PRODUCT p3- TASK 9 | |
| U-I | PRODUCT p1- TASK 10 | PRODUCT p2- TASK 10 | PRODUCT p3- TASK 10 | |
| U-A | | | | PRODUCT p1- TASK 16 |
| E-I | | | | |
| I-O | | | | |

SIMPLE TIME SLOT

tg1-1          tg2-1          tg3-1          tg1-2

142

EP 4 024 300 A1

FIG. 3B

142

tg1-3  tg2-3

| | 5 | 6 | 7 | 8 |
|---|---|---|---|---|
| | | | | PRODUCT p1- TASK 29 |
| | PRODUCT p2- TASK 11 | PRODUCT p1- TASK 17 | PRODUCT p2- TASK 17 | PRODUCT p1- TASK 23 |
| | PRODUCT p2- TASK 12 | PRODUCT p1- TASK 18 | PRODUCT p2- TASK 18 | PRODUCT p1- TASK 24 |
| | PRODUCT p2- TASK 13 | PRODUCT p1- TASK 19 | PRODUCT p2- TASK 19 | PRODUCT p1- TASK 25 |
| | PRODUCT p2- TASK 14 | PRODUCT p1- TASK 20 | PRODUCT p2- TASK 20 | |
| | PRODUCT p2- TASK 15 | PRODUCT p1- TASK 21 | PRODUCT p2- TASK 21 | |
| | | | | |
| | | | | PRODUCT p1- TASK 27 |
| | PRODUCT p2- TASK 16 | PRODUCT p1- TASK 22 | PRODUCT p2- TASK 22 | |
| | | | | PRODUCT p1- TASK 26 |
| | | | | PRODUCT p1- TASK 28 |

SIMPLE TIME SLOT

tg1-4

tg2-2

EP 4 024 300 A1

# FIG. 3C

EP 4 024 300 A1

| | 9 | 10 | 11 | 12 |
|---|---|---|---|---|
| | | PRODUCT p2- TASK 29 | | PRODUCT p3- TASK 29 |
| | PRODUCT p3- TASK 11 | PRODUCT p2- TASK 23 | PRODUCT p3- TASK 17 | PRODUCT p3- TASK 23 |
| | PRODUCT p3- TASK 12 | PRODUCT p2- TASK 24 | PRODUCT p3- TASK 18 | PRODUCT p3- TASK 24 |
| | PRODUCT p3- TASK 13 | PRODUCT p2- TASK 25 | PRODUCT p3- TASK 19 | PRODUCT p3- TASK 25 |
| | PRODUCT p3- TASK 14 | | PRODUCT p3- TASK 20 | |
| | PRODUCT p3- TASK 15 | | PRODUCT p3- TASK 21 | |
| | | PRODUCT p2- TASK 27 | | PRODUCT p3- TASK 27 |
| | PRODUCT p3- TASK 16 | | PRODUCT p3- TASK 22 | |
| | | PRODUCT p2- TASK 26 | | PRODUCT p3- TASK 26 |
| | | PRODUCT p2- TASK 28 | | PRODUCT p3- TASK 28 |

SIMPLE TIME SLOT

tg3-2    tg2-4    tg3-3    tg3-4

142

# FIG. 4

TIME SLOT

Legend:
- FIRST PRODUCT p1
- FIRST PRODUCT p2
- FIRST PRODUCT p3

EP 4 024 300 A1

# FIG. 5

# FIG. 6

141

| TASK NUMBER | HARDWARE | REQUIRED TIME SLOT |
|---|---|---|
| 1 | O | 1 |
| 2 | O-U | 5 |
| 3 | U | 6 |
| 4 | U-E | 5 |
| 5 | E | 1 |
| 6 | E-A | 5 |
| 7 | A | 44 |
| 8 | A-I | 11 |
| 9 | I | 40 |
| 10 | I-U | 10 |
| 11 | (U) | 23 |
| 12 | U-E | 5 |
| 13 | E | 1 |
| 14 | E-A | 5 |
| 15 | A | 8 |
| 16 | A-U | 5 |
| 17 | (U) | 11 |
| 18 | U-E | 5 |
| 19 | E | 1 |
| 20 | E-A | 5 |
| 21 | A | 14 |
| 22 | A-U | 5 |
| 23 | (U) | 11 |
| 24 | U-E | 5 |
| 25 | E | 1 |
| 26 | E-I | 5 |
| 27 | I | 46 |
| 28 | I-O | 15 |
| 29 | O | 1 |

| TASK GROUP | TASK |
|---|---|
| tg1 | 1~10 |
| tg2 | 11~16 |
| tg3 | 17~22 |
| tg4 | 23~29 |

FIG. 7

30a

tg1-1 | tg1-2 | tg1-3 | tg1-4 | tg2-1 | tg2-2 | tg2-3 | tg2-4 | tg3-1 | tg3-2 | tg3-3 | tg3-4

TIME (SIMPLE TIME SLOT)

30b

tg1-1 | tg2-1 | tg3-1 | tg1-2 | tg2-2 | tg1-3 | tg2-3 | tg1-4 | tg3-2 | tg2-4 | tg3-3 | tg3-4

TIME (SIMPLE TIME SLOT)

EP 4 024 300 A1

# FIG. 8

EP 4 024 300 A1

job1-(4)  job2-(4)

| job-1 11 | job-2 11 | |
| job-1 12 | job-2 12 | ? |
| job-1 13 | job-2 13 | |
| job-1 14 | job-2 14 | |
| job-1 15 | **job-2 15** | |
| t | t+1 | t+2 |

⇒

job1-(4)  job2-(4)  job1-(5)

| job-1 11 | job-2 11 | job-1 17 |
| job-1 12 | job-2 12 | job-1 18 |
| job-1 13 | job-2 13 | job-1 19 |
| job-1 14 | job-2 14 | job-1 20 |
| job-1 15 | **job-2 15** | job-1 21 |
| t | t+1 | t+2 |

EP 4 024 300 A1

# FIG. 9

job2-(2)    job3-(2)

job1-(5)

| | | | |
|---|---|---|---|
| job-2  2 | job-3  2 | | |
| job-2  3 | job-3  3 | | |
| job-2  4 | job-3  4 | job-1  17 | |
| job-2  5 | job-3  5 | job-1  18 | ? |
| job-2  6 | job-3  6 | job-1  19 | |
| job-2  7 | job-3  7 | job-1  20 | |
| | | job-1  21 | |

t          t+1          t+2          t+3

job2-(2)    job3-(2)

job1-(5)    job2-(4)

| | | | |
|---|---|---|---|
| job-2  2 | job-3  2 | | job-2  11 |
| job-2  3 | job-3  3 | | job-2  12 |
| job-2  4 | job-3  4 | job-1  17 | job-2  13 |
| job-2  5 | job-3  5 | job-1  18 | job-2  14 |
| job-2  6 | job-3  6 | job-1  19 | **job-2  15** |
| job-2  7 | job-3  7 | job-1  20 | |
| | | job-1  21 | |

t          t+1          t+2          t+3

# FIG. 10

| | | | |
|---|---|---|---|
| job3-(4) | | | job3-(5) |

| job-3 11 | | | job-3 17 |
| job-3 12 | ? | ... ? | job-3 18 |
| job-3 13 | | | job-3 19 |
| job-3 14 | | | job-3 20 |
| **job-3 15** | | | **job-3 21** |

| t | t+1 | t+x-1 | t+x |

(2), (4), AND (5) OF ANOTHER PRODUCT IS UP TO ONE

| | | | |
|---|---|---|---|
| job3-(4) | | | job3-(5) |

| job-3 11 | | | job-3 17 |
| job-3 12 | ? | ... ? | job-3 18 |
| job-3 13 | | | job-3 19 |
| job-3 14 | | | job-3 20 |
| **job-3 15** | | | **job-3 21** |

| t | t+1 | t+x-1 | t+x |

# FIG. 11

job1-(2)  job2-(2)                          job1-(4)

| t | t+1 | t+2 | t+x-1 | t+x |
|---|-----|-----|-------|-----|
| job-1 2<br>job-1 3<br>job-1 4<br>job-1 5<br>job-1 6<br>job-1 7 | job-2 2<br>job-2 3<br>job-2 4<br>job-2 5<br>job-2 6<br>job-2 7 | ? | ... ? | job-1 11<br>job-1 12<br>job-1 13<br>job-1 14<br>job-1 15 |

⇨

(2), (4), AND (5) OF ANOTHER PRODUCT IS UP TO ONE

job1-(2)  job2-(2)                          job1-(4)

| t | t+1 | t+2 | t+x-1 | t+x |
|---|-----|-----|-------|-----|
| job-1 2<br>job-1 3<br>job-1 4<br>job-1 5<br>job-1 6<br>job-1 7 | job-2 2<br>job-2 3<br>job-2 4<br>job-2 5<br>job-2 6<br>job-2 7 | ? | ... ? | job-1 11<br>job-1 12<br>job-1 13<br>job-1 14<br>job-1 15 |

# FIG. 12

job1-(4)

job-1  11
job-1  12
job-1  13
job-1  14
job-1  15

?

t

t+1

job1-(4)

job-1  11
job-1  12
job-1  13
job-1  14
job-1  15

job1-(5)
CANNOT BE
ENTERED

?

t

t+1

# FIG. 13

# FIG. 14A

EP 4 024 300 A1

# FIG. 14B

EP 4 024 300 A1

# FIG. 14C

142

|   | 9 | 10 | 11 | 12 |
|---|---|----|----|----|
| | | PRODUCT p2- TASK 29 | | PRODUCT p3- TASK 29 |
| | PRODUCT p3- TASK 11 | PRODUCT p2- TASK 23 | PRODUCT p3- TASK 17 | PRODUCT p3- TASK 23 |
| | PRODUCT p3- TASK 12 | PRODUCT p2- TASK 24 | PRODUCT p3- TASK 18 | PRODUCT p3- TASK 24 |
| | PRODUCT p3- TASK 13 | PRODUCT p2- TASK 25 | PRODUCT p3- TASK 19 | PRODUCT p3- TASK 25 |
| | PRODUCT p3- TASK 14 | | PRODUCT p3- TASK 20 | |
| | PRODUCT p3- TASK 15 | | PRODUCT p3- TASK 21 | |
| | | PRODUCT p2- TASK 27 | | PRODUCT p3- TASK 27 |
| | PRODUCT p3- TASK 16 | | PRODUCT p3- TASK 22 | |
| | | PRODUCT p2- TASK 26 | | PRODUCT p3- TASK 26 |
| | | PRODUCT p2- TASK 28 | | PRODUCT p3- TASK 28 |

SIMPLE TIME SLOT

tg3-2        tg2-4                    tg3-3            tg3-4

EP 4 024 300 A1

# FIG. 15

```
PRODUCT p1-C 1
PRODUCT p1-TASK 2
PRODUCT p1-TASK 3
PRODUCT p1-TASK 4
PRODUCT p1-TASK 5
PRODUCT p1-TASK 6
PRODUCT p1-TASK 7
PRODUCT p1-TASK 8
PRODUCT p1-TASK 9
PRODUCT p1-TASK 10
PRODUCT p2-TASK 1
PRODUCT p2-TASK 2
PRODUCT p2-TASK 3
PRODUCT p2-TASK 4
PRODUCT p2-TASK 5
PRODUCT p2-TASK 6
PRODUCT p2-TASK 7
PRODUCT p2-TASK 8
PRODUCT p2-TASK 9
PRODUCT p2-TASK 10
PRODUCT p3-TASK 1
PRODUCT p3-TASK 2
PRODUCT p3-TASK 3
PRODUCT p3-TASK 4
PRODUCT p3-TASK 5
PRODUCT p3-TASK 6
PRODUCT p3-TASK 7
PRODUCT p3-TASK 8
PRODUCT p3-TASK 9
PRODUCT p3-TASK 10
PRODUCT p1-TASK 11
PRODUCT p1-TASK 12
PRODUCT p1-TASK 13
PRODUCT p1-TASK 14
PRODUCT p1-TASK 15
PRODUCT p1-TASK 16
PRODUCT p2-TASK 11
PRODUCT p2-TASK 12
PRODUCT p2-TASK 13
PRODUCT p2-TASK 14
PRODUCT p2-TASK 15
PRODUCT p2-TASK 16
PRODUCT p1-TASK 17
PRODUCT p1-TASK 18
PRODUCT p1-TASK 19
PRODUCT p1-TASK
...
PRODUCT p3-TASK 26
PRODUCT p3-TASK 27
PRODUCT p3-TASK 28
PRODUCT p3-TASK 29
```

# FIG. 16

START

**S10**
SET CONSIDERATION STATUS OF "PRODUCT-TASK" OF FIRST ORDER OF EACH PIECE OF HARDWARE TO "Enable", AND SET CONSIDERATION STATUS OF "PRODUCT-TASK" OF OTHERS TO "not enable", IN CONSIDERATION STATUS LIST

**S11**
INITIALIZE PRODUCT-TASK CONSIDERATION ORDER LIST

**S12**
SET ALL CONSIDERATION-WAITING TASK NUMBERS OF EACH PRODUCT TO "1" IN CONSIDERATION-WAITING TASK NUMBER LIST

**S13**
IS CURRENT "PRODUCT-TASK" Enable? — NO

YES

**S14**
ADD CURRENT "PRODUCT-TASK" TO END OF PRODUCT-TASK CONSIDERATION ORDER LIST

**S15**
SET CONSIDERATION STATUS OF CURRENT "PRODUCT-TASK" TO done

**S16**
SET not enable → enable FOR "PRODUCT-TASK" THAT IS SET IN NEXT ORDER IN HARDWARE THAT EXECUTES CURRENT "PRODUCT-TASK"

**S17**
REGISTER TASK NUMBER OF CURRENT "PRODUCT-TASK" IN CONSIDERATION-WAITING TASK NUMBER LIST OF CURRENT PRODUCT

**S18**
PERFORM Break (PROCEED TO "PRODUCT-TASK" HAVING TASK NUMBER DESCRIBED IN CONSIDERATION-WAITING TASK NUMBER LIST FOR NEXT PRODUCT)

**S19**
HAS PROCESSING OF EACH TASK BEEN ENDED? — NO

YES

**S20**
PROCEED TO NEXT TASK

**S21**
HAS PROCESSING OF EACH PRODUCT BEEN ENDED? — NO

YES

**S22**
PROCEED TO TASK OF NEXT PRODUCT

END

# FIG. 17

# FIG. 18

# FIG. 19

EP 4 024 300 A1

# FIG. 20

38

# FIG. 21

START

**S31**
ACQUIRE CURRENT "PRODUCT-TASK" FROM PRODUCT-TASK CONSIDERATION ORDER LIST

**S32**
ATTEMPT TO ALLOCATE TIME SLOT IN CURRENT HARDWARE, STARTING FROM END TIME +1 OF "PRODUCT-TASK" IMMEDIATELY BEFORE IN "PRODUCT" OF CURRENT "PRODUCT-TASK"

**S33**
FEASIBLE? — YES

NO

**S34**
ARRANGE CURRENT "PRODUCT-TASK" IN TIME SLOT IMMEDIATELY AFTER "PRODUCT-TASK" THAT IS IMMEDIATELY BEFORE IN CURRENT HARDWARE

**S35**
ATTEMPT TO EXTEND WORK TIME OF "PRODUCT-TASK" IMMEDIATELY BEFORE IN PRODUCT OF CURRENT "PRODUCT-TASK", TO IMMEDIATELY BEFORE CURRENT "PRODUCT-TASK"

**S36**
AVAILABLE? — YES

NO

**S37**
ATTEMPT TO SHIFT TO IMMEDIATELY AFTER CURRENT "PRODUCT-TASK" IN "PRODUCT-TASK" THAT IS CAUSE OF UNAVAILABILITY

**S38**
AVAILABLE? — NO

YES

**S39**
HAS PROCESSING OF EACH "PRODUCT-TASK" BEEN ENDED?

NO

YES

END

# FIG. 22

```
                    ┌─────────────┐
                    │    START    │
                    └──────┬──────┘
                           │           ⟋S101
          ┌────────────────▼────────────────┐
          │   ACQUIRE IMPLEMENTATION INFORMATION   │
          └────────────────┬────────────────┘
                           │           ⟋S102
          ┌────────────────▼────────────────┐
          │  CLASSIFY TASKS OF EACH PRODUCT INTO TASK  │
          │  GROUPS ON BASIS OF IMPLEMENTATION  │
          │           INFORMATION           │
          └────────────────┬────────────────┘
                           │           ⟋S103
          ┌────────────────▼────────────────┐
          │      CALCULATE SIMPLE TIME SLOT      │
          └────────────────┬────────────────┘
                           │           ⟋S104
          ┌────────────────▼────────────────┐
          │  CONSTRUCT MATHEMATICAL MODEL ON BASIS OF  │
          │   TASK GROUP AND SIMPLE TIME SLOT   │
          └────────────────┬────────────────┘
                           │           ⟋S105
          ┌────────────────▼────────────────┐
          │  FIND SOLUTION OF MATHEMATICAL MODEL WITH  │
          │   MATHEMATICAL PLANNING SOLVER   │
          └────────────────┬────────────────┘
                           │           ⟋S106
          ┌────────────────▼────────────────┐
          │  PRODUCT-TASK CONSIDERATION ORDER LIST  │
          │       DETERMINATION PROCESS       │
          └────────────────┬────────────────┘
                           │           ⟋S107
          ┌────────────────▼────────────────┐
          │  SCHEDULE INFORMATION SPECIFICATION  │
          │            PROCESS            │
          └────────────────┬────────────────┘
                           │
                    ┌──────▼──────┐
                    │     END     │
                    └─────────────┘
```

# FIG. 23

COMPUTER — 200

| CPU 201 | INPUT DEVICE 202 | DISPLAY 203 | COMMUNICATION DEVICE 204 | INTERFACE DEVICE 205 |

208

RAM — 206

- CLASSIFICATION PROCESS — 206a
- SOLUTION PROCESS — 206b
- SPECIFICATION PROCESS — 206c

HARD DISK DRIVE — 207

- CLASSIFICATION PROGRAM — 207a
- SOLUTION PROGRAM — 207b
- SPECIFICATION PROGRAM — 207c

EP 4 024 300 A1

# FIG. 24

FIRST PRODUCT p2

FIRST PRODUCT p1

EP 4 024 300 A1

# FIG. 25

FIRST PRODUCT p1

FIRST PRODUCT p2

Europäisches
Patentamt

European
Patent Office

Office européen
des brevets

# EUROPEAN SEARCH REPORT

Application Number

**EP 21 19 8838**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/209153 A1 (SUZUKI NORIAKI [JP] ET AL) 25 August 2011 (2011-08-25) * abstract * * paragraph [0015] - paragraph [0017] * ----- | 1-9 | INV. G06Q10/04 G06Q10/06 |
| X | US 2019/213040 A1 (OHBA YOSHIHIRO [JP]) 11 July 2019 (2019-07-11) * abstract; figure 7 * * paragraph [0027] - paragraph [0028] * * paragraph [0052] - paragraph [0058]; figure 3 * ----- | 1-9 | |

**TECHNICAL FIELDS SEARCHED (IPC)**

G06Q

The present search report has been drawn up for all claims

| Place of search | Date of completion of the search | Examiner |
|---|---|---|
| **Munich** | **9 March 2022** | **Lopes Margarido, C** |

EPO FORM 1503 03.82 (P04C01)

## ANNEX TO THE EUROPEAN SEARCH REPORT
## ON EUROPEAN PATENT APPLICATION NO.

EP 21 19 8838

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2022

| Patent document cited in search report | | Publication date | Patent family member(s) | | Publication date |
|---|---|---|---|---|---|
| US 2011209153 | A1 | 25-08-2011 | JP | 5464146 B2 | 09-04-2014 |
| | | | JP | WO2010055719 A1 | 12-04-2012 |
| | | | US | 2011209153 A1 | 25-08-2011 |
| | | | WO | 2010055719 A1 | 20-05-2010 |
| US 2019213040 | A1 | 11-07-2019 | JP | 2019121240 A | 22-07-2019 |
| | | | US | 2019213040 A1 | 11-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005190241 A